(19) Europäisches Patentamt
European Patent Office
Office européen des brevets

(11) **EP 2 629 161 A2**

(12) # EUROPEAN PATENT APPLICATION

(43) Date of publication:
**21.08.2013 Bulletin 2013/34**

(51) Int Cl.:
*G05B 13/02* (2006.01)

(21) Application number: **13154907.3**

(22) Date of filing: **12.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.02.2012 JP 2012029324**

(71) Applicant: **OMRON CORPORATION**
**Kyoto-shi, Kyoto 600-8530 (JP)**

(72) Inventors:
- **Yachiku, Hideki**
  **Kyoto, Kyoto 600-8530 (JP)**
- **Hattori, Reiko**
  **Kyoto, Kyoto 600-8530 (JP)**

(74) Representative: **Horn Kleimann Waitzhofer**
**Elsenheimerstraße 65**
**DE-80687 München (DE)**

(54) **System control apparatus and system control method**

(57) The present invention provides a system control apparatus and a system control method. The system control apparatus comprises: an acquisition part (101); a derivation part (102) that continuously derives a stability index of the status data based on a time series of the status data; a prediction part (103)that derives a prediction range based on the status data and the index ; and a controller (104) that controls the operation of the instrument based on the prediction range. In consideration of an influence of a disturbance, the prediction range is derived with respect to data indicating the state in which quality of a product produced by the production system, and the instrument is controlled based on a relationship between the prediction range and the reference value. Therefore, the instrument can be controlled in consideration of a variation in status data due to the influence of the disturbance.

*FIG. 8*

200
PARTICLE SENSOR
PARTICLE SENSOR
PARTICLE SENSOR
100
101
DATA ACCUMULATION PART
102
STABILITY INDEX DERIVATION PART
103
UPPER-LIMIT PREDICTED VALUE CALCULATOR
106
UPPER-LIMIT PREDICTED VALUE CORRECTOR
105
DISPLAY CONTROLLER
104
INSTRUMENT CONTROLLER
111
MONITOR
300
FFU

EP 2 629 161 A2

## Description

1. TECHNICAL FIELD

The present invention relates to system control, particularly to a system control apparatus and a system control method, for controlling an instrument, which adjusts a characteristic of a system, based on a detection result of the characteristic of the system.

2. RELATED ART

Conventionally, in a production system, sometimes an instrument is placed in order to maintain data (hereinafter referred to as "status data") indicating a state that affects quality of the product produced by the production system at a predetermined reference value or within a predetermined reference range. Examples of the data include a temperature or humidity at a room where the system is installed, a pressure difference between the inside and the outside of the room where the system is installed, a noise level of the room that is of a control target of the system, and a size, roundness, sphericity, and parallelism of the product (or an intermediate) produced by the system.

There are disclosed various technologies in which, in the system, the status data is maintained while power consumption of the instrument is suppressed.

For example, in a technology disclosed in Japanese Unexamined Patent Publication No. 2005-249243, a fan that performs air conditioning of a target room and a sensor (such as a temperature sensor and a humidity sensor) that detects a state of the air conditioning are provided, and the number of revolutions of the fan is increased in a stepwise manner according to a detection value of the sensor.

In a technology disclosed in Japanese Unexamined Patent Publication No. 2002-357346, a sensor (particle sensor) is provided in order to detect an air cleanliness class of an air-conditioning target room, and an output of an air conditioner that performs the air conditioning of the target room is suppressed to the minimum when the detection value of the sensor is largely less than an upper limit.

In a cogeneration system disclosed in Japanese Unexamined Patent Publication No. 2006-29771, regularity determination processing of determining whether regularity exists in energy consumption in each setup period including plural unit times is performed, load satisfying condition running processing is performed when the regularity exists in the energy consumption, and auxiliary running processing different from the load satisfying condition running processing is performed when the regularity does not exist in the energy consumption.

In a technology for a cogeneration system disclosed in Japanese Unexamined Patent Publication No. 2011-27408, whether the regularity exists in the energy consumption is determined based on past thermal load data or past electric power load data, generation of a load is predicted based on the regularity when the regularity exists in the energy consumption, and running of a cogeneration apparatus is controlled such that the predicted load is satisfied.

Japanese Unexamined Patent Publication No. 2011-69601 discloses a technology related to instrument control performed by an instrument management device. In the technology, the instrument management device estimates an objective degree of amenity of a user based on a detection output of the sensor, and estimates a subjective degree of amenity of the user based on a statement of the user. The current degree of amenity of the user is obtained from the estimated degrees of amenity. Assuming that control contents of the operation of the instrument are changed, a predicted value of an after-the-fact electricity charge and a utility value that previously provided to the user are estimated in each control content, and the after-the-fact utility value is estimated with respect to the instrument based on the predicted value and the utility value. The control contents of the instrument are decided such that the after-the-fact utility value becomes the maximum with respect to the instrument.

However, in the technologies disclosed in Japanese Unexamined Patent Publication Nos. 2005-249243 and 2002-357346, because the control is performed by comparing the detection value of the sensor to a fixed control value, possibly a drive device is excessively controlled to generate an energy loss when the detection value of the sensor has an allowance with respect to the fixed control value. Additionally, when the disturbance largely affects the system, the control of the drive device is too late for the disturbance, and possibly the status data exceeds the reference value or the reference range. Additionally, because the value to be controlled is set by an experience or an intuition of a system manager, unfortunately how much safety or how much the energy saving is implemented cannot previously be recognized in the control in which the status data is used.

In the technology disclosed in Japanese Unexamined Patent Publication No. 2006-29771, although the control is performed according to the regularity when the regularity exists, it is difficult to incorporate consideration of the sudden influence of the disturbance. In the technologies disclosed in Japanese Unexamined Patent Publication Nos. 2011-27408 and 2011-69601, although the future status data is predicted from the past status data, it is also difficult to incorporate consideration of the influence of the disturbance in this prediction. Accordingly, it is still difficult that the status data of the system is surely maintained at the reference value or surely falls within the reference range.

The present invention has been devised to solve the problems described above, and an object thereof is to provide a system control apparatus, a control program for the system control apparatus, and an instrument control method in which, when the status data of the system is maintained at the reference value or within the reference range, the state of the system is surely controlled while generation of useless energy is avoided and a user can recognize a degree of energy saving.

SUMMARY

In accordance with a first aspect of the present invention, there is provided a system control apparatus that controls an operation of an instrument, the instrument consuming energy in order to adjust a state of a production system based on status data, the status data indicating a state that affects production quality of a product produced by the production system, the system control apparatus including: an acquisition part that continuously acquires the status data; a derivation part that continuously derives a stability index of the status data based on the plural pieces of time-series status data; a prediction part that derives a prediction range, where the status data is predicted to change, based on the status data and the index; and a controller that controls the operation of the instrument based on the prediction range derived by the prediction part such that the status data falls within a reference range where the production quality is guaranteed.

Preferably the derivation part obtains a moving standard deviation of the status data as the index based on the plural pieces of time-series status data.

Preferably the prediction part derives the plural prediction ranges having different probabilities in each of which the status data reaches a predicted value.

Preferably the controller switches the operation of the instrument to a direction in which the status data is returned into the reference range in dropping off from the reference range, when at least a part of the prediction range drops off from the reference range.

Preferably the controller switches the operation of the instrument every time each prediction range of the plural prediction ranges drops off from the reference range.

Preferably the system control apparatus further includes a display controller that allows a display device to display a time change of the prediction range.

Preferably the system control apparatus further includes a part that, based on the prediction range, derives a ratio in which an upper-limit predicted value and/or a lower-limit predicted value of the prediction range exceeds the reference range, and predicts a risk that the status data exceeds the reference range.

Preferably the prediction part increases a prediction width to correct the prediction range only for a predetermined time when the status data exceeds the prediction range.

In accordance with a second aspect of the present invention, there is provided a system control apparatus that controls an operation of an instrument the instrument consuming energy in order to adjust a state of a production system based on status data, the status data being output from a sensor measuring the status data indicating a state that affects production quality of a product produced by the production system, the system control apparatus including: a reception part that continuously receives the status data; a derivation part that continuously derives a stability index of the status data based on the plural pieces of time-series status data; a prediction part that derives a prediction range, where the status data is predicted to change, based on the status data and the index; and a controller that controls the operation of the instrument based on the prediction range derived by the prediction part such that the status data falls within a reference range where the production quality is guaranteed.

In accordance with a third aspect of the present invention, there is provided a system control method for controlling an operation of an instrument, the instrument consuming energy in order to adjust a state of a production system based on status data, the status data being output from a sensor measuring the status data indicating a state that affects production quality of a product produced by the production system, the system control method including: a reception step of receiving continuously the status data; a derivation step of deriving continuously a stability index of the status data based on the plural pieces of time-series status data; a prediction step of deriving a prediction range, where the status data is predicted to change, based on the status data and the index; and a control step of controlling the operation of the instrument based on the prediction range derived in the prediction step such that the status data falls within a reference range where the production quality is guaranteed.

In accordance with a fourth aspect of the present invention, there is provided a system control apparatus that controls an operation of a filter fan, the filter fan consuming energy in order to adjust an air cleanliness class of a clean room based on the air cleanliness class, the air cleanliness class indicating a state that affects production quality of a product produced in the clean room, the system control apparatus including: a particle sensor that acquires the air cleanliness class; a derivation part that continuously derives a moving standard deviation of the air cleanliness class based on the plural time-series air cleanliness classes; a prediction part that derives a prediction range, where the air cleanliness class is predicted to change, based on a moving average value and the moving standard deviation of the air cleanliness classes; and a controller that controls the operation of the filter fan based on the prediction range derived by the prediction part such that the air cleanliness class falls within a reference range where the production quality is guaranteed.

In accordance with a fifth aspect of the present invention, there is provided a system control apparatus that controls an operation of a heater, the heater consuming energy in order to adjust a state in a furnace based on a temperature, the temperature indicating a state that affects production quality of a product produced in the furnace, the system control apparatus including: a temperature sensor that acquires the temperature; a derivation part that continuously derives a moving standard deviation of the temperature based on the plural time-series temperatures; a prediction part that derives a prediction range, where the temperature is predicted to change, based on a moving average value and the moving standard deviation of the temperatures; and a controller that controls the operation of the heater based on the prediction range derived by the prediction part such that the temperature falls within a reference range where the production quality is guaranteed.

According to the present invention, based on the plural pieces of time-series status data, the stability index of the status data is continuously derived with respect to the status data indicating the state that affects the production quality of the product produced by the production system. The prediction range, where the status data is predicted to change, is derived based on the status data and the index. The operation of the instrument is controlled based on the derived prediction range such that the status data falls within the reference range where the production quality is guaranteed.

Therefore, in the control based on the status data, the instrument can be controlled based on the prediction range of the status data. Accordingly, a characteristic of the production system is surely controlled while the generation of the useless energy is avoided, and the user can recognize the degree of energy saving.

## BRIEF DESCRIPTION OF THE DRAWINGS

FIG. 1 is a view schematically illustrating an outline of a configuration of a production system including a system control apparatus according to a first embodiment of the present invention;

FIG. 2 is a view illustrating a mode of calculation of a predicted value in the production system;
FIG. 3 is a view schematically illustrating examples of status data and a prediction range in the production system;
FIGS. 4A, 4B, and 4C are views schematically illustrating a moving average, an upper-limit predicted value, and a lower-limit predicted value at each of clock times T1, T2, and T3 in FIG. 3;
FIG. 5 is a view illustrating a correction mode of the predicted value;
FIG. 6 is a view illustrating the correction mode of the predicted value;
FIG. 7 is a view schematically illustrating a hardware configuration of a controller;
FIG. 8 is a view schematically illustrating a functional configuration of the controller;
FIG. 9 is a flowchart of FFU (Filter Fan Unit) control processing performed by the controller;
FIG. 10 is a view illustrating examples of a measured value of a detection output of a particle sensor and an upper-limit predicted value calculated based on the measured value in the production system in which an operation of the FFU is controlled by the controller of the first embodiment;
FIGS. 11A, 11B, 11C, and 11D are views illustrating a comparative example of the first embodiment;
FIG. 12A, 12B, 12C, and 12D are views illustrating a comparative example of the first embodiment;
FIG. 13 is a view illustrating an outline of control according to a second embodiment of the present invention;
FIG. 14 is a view illustrating the outline of the control of the second embodiment;
FIG. 15 is a view illustrating the outline of the control of the second embodiment;
FIG. 16 is a view illustrating the outline of the control of the second embodiment;
FIG. 17 is a view illustrating the outline of the control of the second embodiment;
FIG. 18 is a view illustrating the outline of the control of the second embodiment;
FIG. 19 is a flowchart of processing of controlling the number of revolutions of the FFU of the second embodiment;
FIGS. 20A and 20B are views illustrating specific examples of a time change of the measured value of the status data, first to fourth upper-limit predicted values, and an air volume level of the FFU;
FIG. 21 is a view schematically illustrating a configuration of a production system according to a third embodiment of the present invention;
FIG. 22 is a block diagram of the production system of the third embodiment;
FIG. 23 is a hardware block diagram of a PC (Personal Computer) in FIG. 22;
FIG. 24 is a view illustrating a correction mode of the predicted value of the third embodiment;
FIG. 25 is a view illustrating a control mode of the predicted value of the third embodiment;
FIG. 26 is a flowchart of control of the third embodiment;
FIGS. 27A and 27B are views illustrating an example of a control result of the third embodiment;
and
FIG. 28 is a view illustrating an example of a screen displayed on the PC connected to the controller of the third embodiment.

## DETAILED DESCRIPTION

Hereinafter, embodiments of heating furnaces of the present invention will be described with reference to the drawings. In the drawings, the same component is designated by the same numeral, and the detailed description is not repeated.

[First Embodiment]

<System configuration>

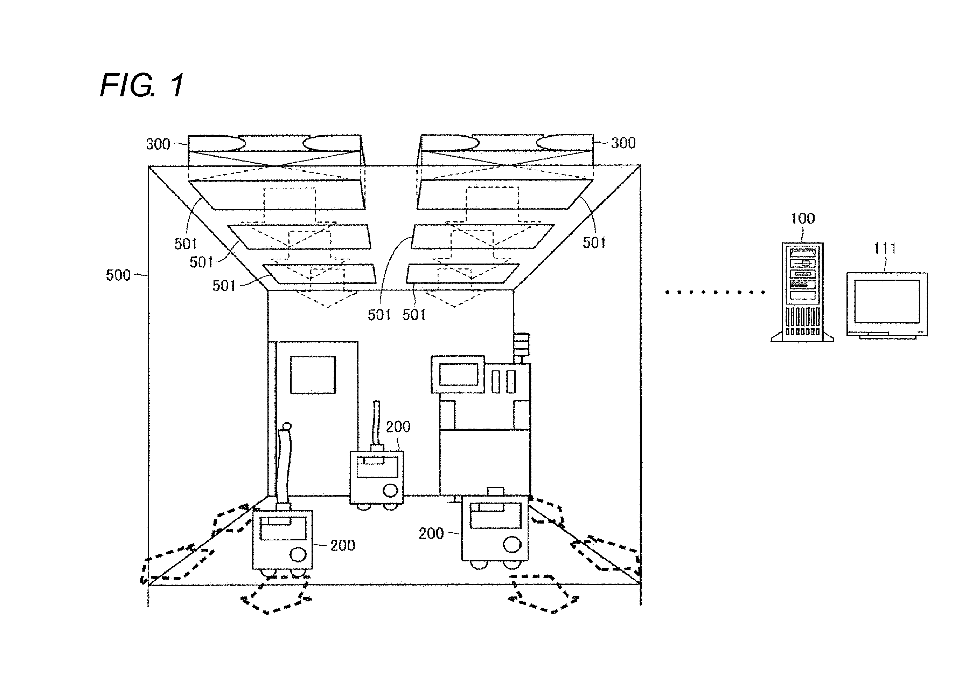

FIG. 1 is a view schematically illustrating an outline of a configuration of a production system including a system control apparatus according to a first embodiment of the present invention.

Referring to FIG. 1, the production system includes a clean booth 500 that is a space used to produce a product. Particle sensors 200 are placed in the clean booth 500 in order to detect cleanliness in the clean booth 500. Although not illustrated in FIG. 1, in the clean booth 500, a line is placed to produce the product, and a worker is arranged to manage the line.

Frames 501 are formed in a ceiling portion of the clean booth 500, and an FFU (Filter Fan Unit) 300 including a fan, which discharges dust in the clean booth 500 to the outside of the clean booth 500, is placed in each of the frames 501.

In FIG. 1, a broken-line arrow indicates an air flow. In the clean booth 500, the fan (hereinafter, sometimes the "FFU 300" means the "fan" included in the FFU 300) of the FFU 300 runs to introduce air into the clean booth 500, whereby the air in the clean booth 500 is discharged to the outside of the clean booth 500 through ventilation holes provided in a bottom surface of the clean booth 500.

The production system in FIG. 1 includes a controller 100 that controls an operation of the FFU 300 based on a detection output of the particle sensor 200. A monitor 111 is connected to the controller 100. The monitor 111 is constructed by general-purpose display devices, such as a liquid crystal display device.

In the first embodiment, the cleanliness detected by the particle sensor 200 in the clean booth 500 is an example of the status data indicating a state in which the cleanliness affects production quality of the product produced in the production system. The FFU 300 is an example of the instrument that consumes energy by the running for the purpose of adjustment of the system state. The controller 100 is an example of the system control apparatus that controls the operation of the instrument based on the status data.

<Outline of Control>

(Derivation of prediction range based on continuously-acquired status data)

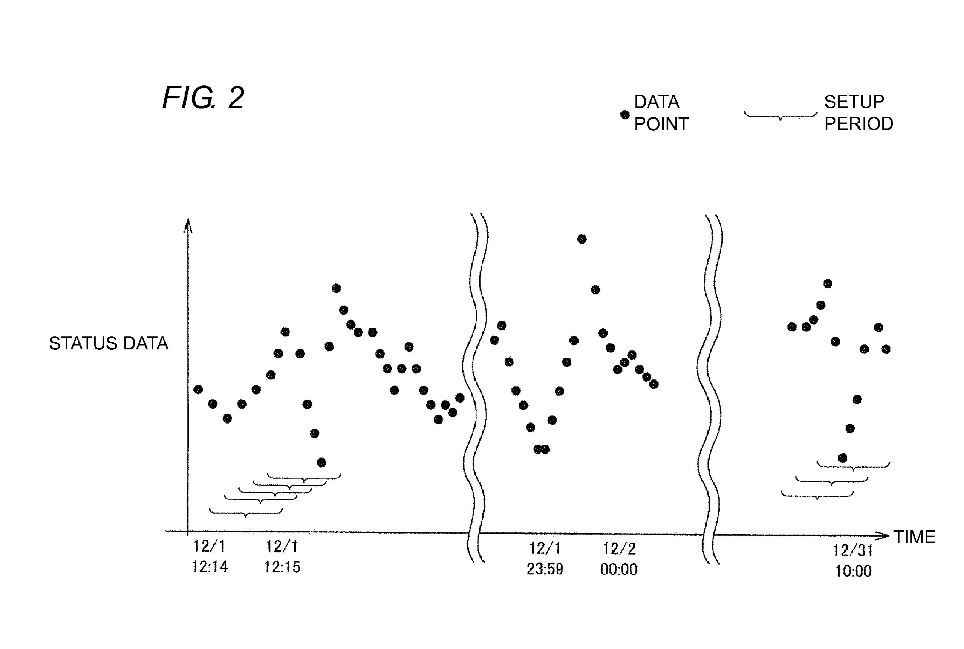

In the first embodiment, for example, as illustrated in FIG. 2, the particle sensor 200 continuously detects the cleanliness in the clean booth 500. FIG. 2 illustrates a time change of the cleanliness (status data) detected by the particle sensor 200. The controller 100 continuously acquires the detection output of the particle sensor 200, and derives a range (prediction range) where the cleanliness is predicted to change at a certain time point using the pieces of past status data for a predetermined setup period with respect to the time point.

The controller 100 controls the running of the FFU 300 based on the prediction range such that the status data (cleanliness) does not exceed a range required in the production system.

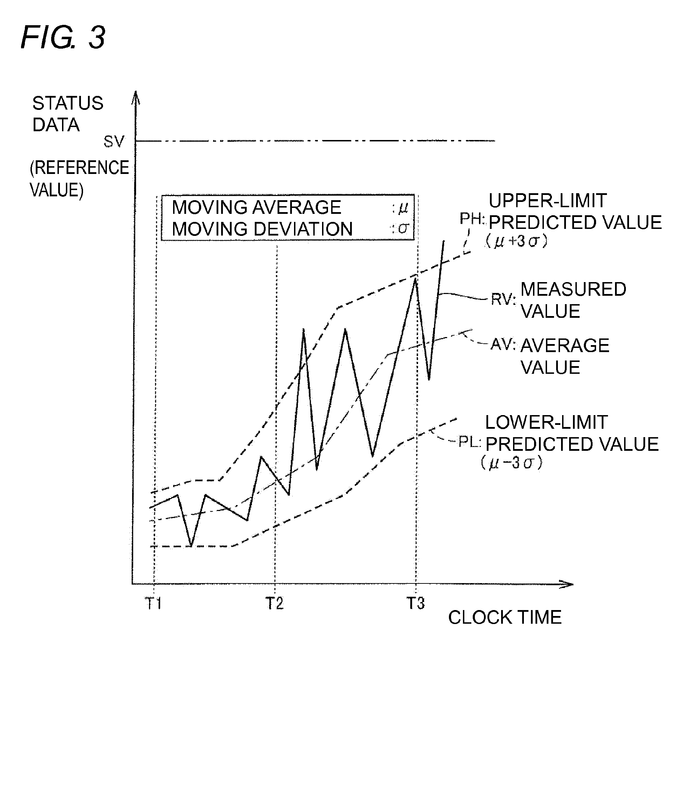

FIG. 3 is a view schematically illustrating examples of the status data and the prediction range in the production system. In FIG. 3, a measured value (measured value RV) of the status data is indicated by a solid line, an upper limit (upper-limit predicted value PH) and a lower limit (lower-limit predicted value PL) of the prediction range are indicated by a broken line, and an average value (average value AV) of the prediction range is indicated by an alternate long and short dash line.

The prediction range at each time point is derived using a moving average of the status data in the setup period in FIG. 2 with respect to the time point and a moving deviation δ of the status data in the setup period. Specifically, an upper limit PH and a lower limit PL of the prediction range are derived according to the following equations (1) and (2).

$$PH = \mu + 3\delta \qquad (1)$$

$$PL = \mu - 3\delta \qquad (2)$$

(Explanation of upper-limit predicted value and lower-limit predicted value)

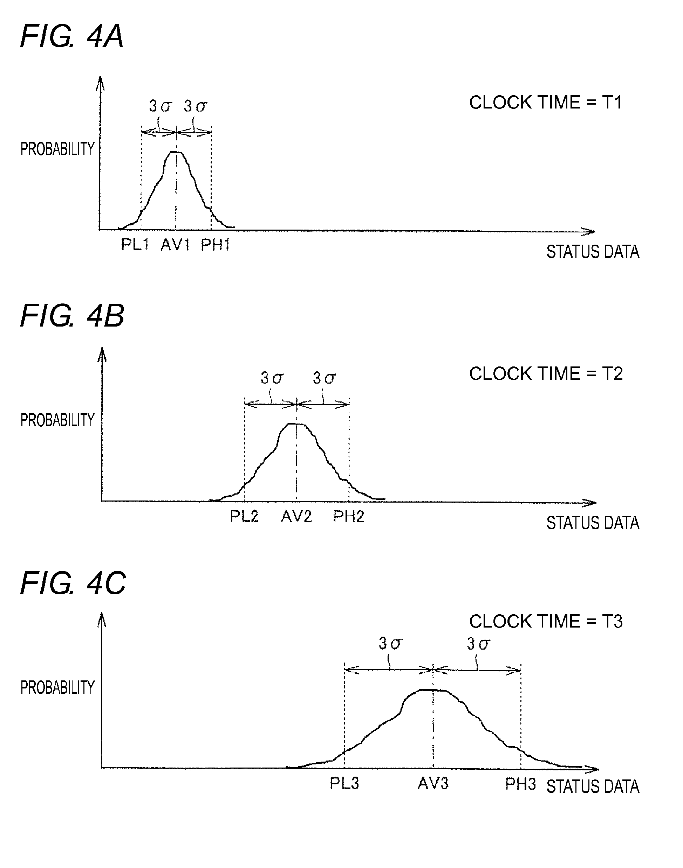

FIGS. 4A, 4B, and 4C are views schematically illustrating a moving average, an upper-limit predicted value, and a lower-limit predicted value at each of clock times T1, T2, and T3 in FIG. 3.

In FIG. 4A, a status data distribution of the measured values for the setup period before a clock time T1 is illustrated by the solid line at the clock time T1. In FIG. 4A, a value in which 3 δ (δ is a moving deviation obtained from the measured values for the setup period) is added to a moving average AV1 is indicated as an upper-limit predicted value PH1, and a value in which 3 δ is subtracted from AV1 is indicated as a lower-limit predicted value PL1.

In FIG. 4B, a status data distribution of the measured values for the setup period before a clock time T2 is illustrated by the solid line at the clock time T2. In FIG. 4B, a value in which 3 δ is added to a moving average AV2 for the setup period is indicated as an upper-limit predicted value PH2, and a value in which 3 δ is subtracted from the moving average AV2 is indicated as a lower-limit predicted value PL2.

In FIG. 4C, a status data distribution of the measured values for the setup period before a clock time T3 is illustrated by the solid line at the clock time T3. In FIG. 4C, a value in which 3 $\delta$ is added to a moving average AV3 for the setup period is indicated as an upper-limit predicted value PH3, and a value in which 3 $\delta$ is subtracted from the moving average AV3 is indicated as a lower-limit predicted value PL3.

In the first embodiment, the prediction range is derived from moment to moment. That is, the prediction range with respect to the clock time T1 is derived based on the pieces of status data for the setup period immediately before the clock time T1, and the prediction ranges with respect to the clock times T2 and T3 are derived based on the pieces of status data for the setup periods immediately before the clock times T2 and T3, respectively. Therefore, the situation of the clean booth 500 that changes from moment to moment can be reflected in the prediction range.

In the first embodiment, the operation (such as the number of revolutions) of the FFU 300 is controlled based on a relationship between the upper limit and/or the lower limit of the prediction range and a reference value (a value in which it is necessary to retain the status data in order to maintain the production quality of the product) with respect to the status data. In FIG. 3, a reference value SV is indicated by an alternate long and two short dashes line.

The system, in which the reference value is set only to an upper side of the status data, is described in the first embodiment.

(Correction of upper-limit predicted value and/or lower-limit predicted value)

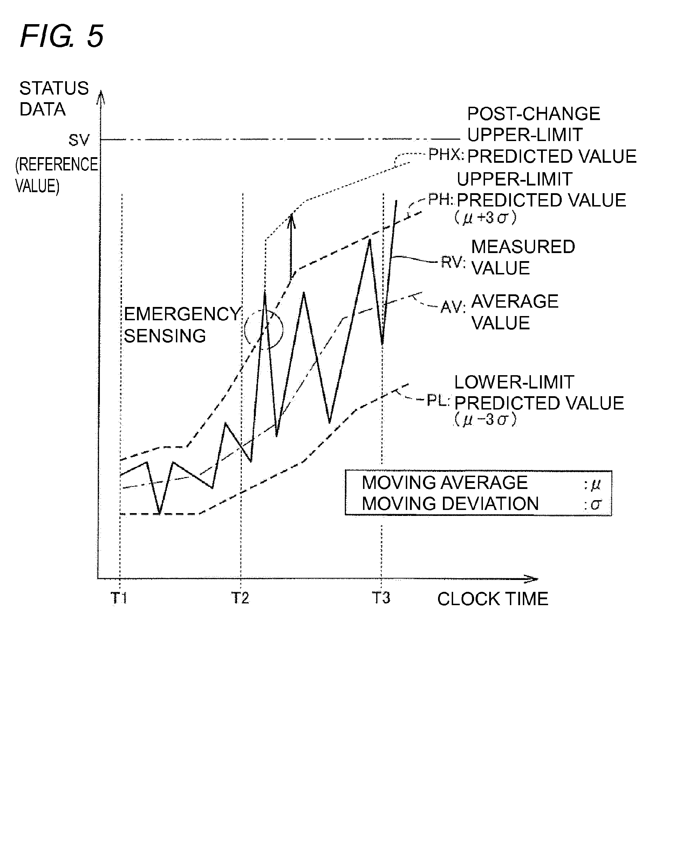

When the measured value of the status data is greater than the upper limit or less than the lower limit of the prediction range, the controller 100 corrects the upper limit upward, or corrects the lower limit downward. FIG. 5 illustrates the measured value of the status data, which is greater than the upper limit of the prediction range at a time point indicated as "emergency sensing". In FIG. 5, the upper-limit predicted value is corrected upward after the time point indicated as "emergency sensing". The pre-correction upper-limit predicted value PH is indicated by a broken line, and a post-correction upper-limit predicted value PHX is indicated by a dotted line. In this case, for example, the correction is implemented by adding (subtracting) a predetermined value to the upper limit (or from the lower limit) calculated according to the equation (1) or (2) based on the status data of the past measured values for the setup period with respect to each clock time.

The upper limit or the lower limit of the prediction range is corrected only for a predetermined period since the emergency sensing.

The upper limit or the lower limit of the prediction range may be corrected by changing an addition or subtraction mode of the moving deviation $\delta$ to the moving average $\mu$.

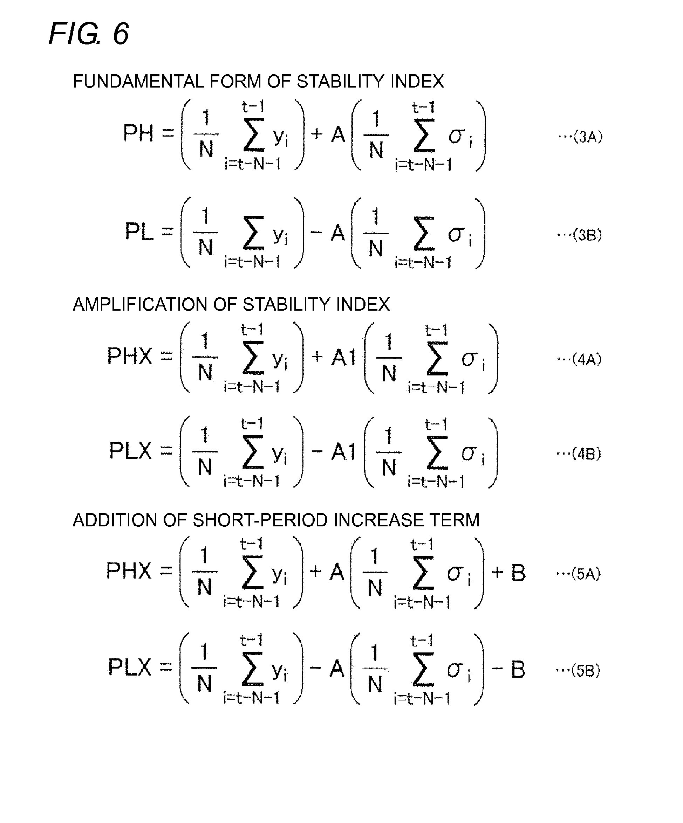

Specifically, for example, when fundamental calculation equations of the upper-limit predicted value PH and the lower-limit predicted value PL are expressed by equations (3A) and (3B) in FIG. 6, the post-correction upper-limit predicted value PHX and the post-correction lower-limit predicted value PLX are expressed by equations (4A) and (4B) in FIG. 6. In a right side of the equation (3A), a first term corresponds to the moving average, and a second term corresponds to the moving deviation. In the equation (3A), a coefficient A of the second term of the right side is a coefficient for the moving deviation, and corresponds to the coefficient of "3" of the moving deviation $\delta$ of the equation (1). In the equation (3B), the coefficient A of the second term of the right side corresponds to the coefficient of "3" of the moving deviation $\delta$ of the equation (2).

In the equations (4A) and (4B), the coefficients for the moving deviations are corrected from "A" to "A1" with respect to the equations (3A) and (3B). Both A and A1 are positive values, and a relationship of "A1 > A" holds. For example, A is "3" and A1 is "4". Therefore, the post-correction upper-limit predicted value PHX is corrected upward with respect to the pre-correction upper-limit predicted value PH. The post-correction lower-limit predicted value PLX is corrected downward with respect to the pre-correction lower-limit predicted value PL.

In FIG. 6, equations (5A) and (5B) express a correction mode in which the upper-limit predicted value is corrected by adding a predetermined value and a correction mode in which the lower-limit predicted value is corrected by subtracting the predetermined value. In the equations (5A) and (5B), the predetermined value is indicated by "B".

The prediction range may be corrected on at least the side on which the reference value is set. In the first embodiment, because the reference value is set only on the upper limit side, the upper-limit predicted value may be corrected only when at least the measured value is greater than the upper-limit predicted value.

<Hardware configuration>

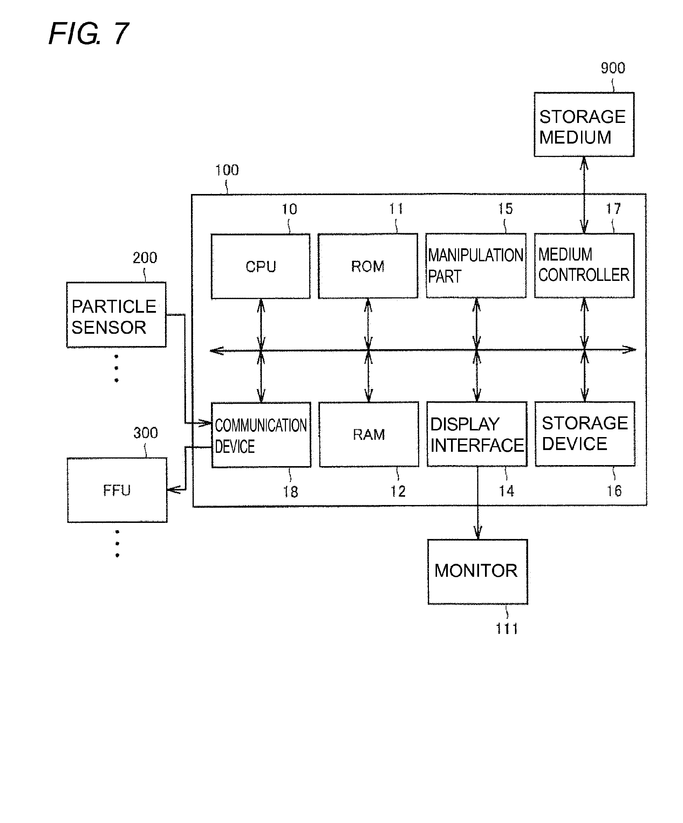

FIG. 7 is a view schematically illustrating a hardware configuration of the controller 100.

Referring to FIG. 7, the controller 100 includes a CPU (Central Processing Unit) 10, a ROM (Read Only Memory) 11, a RAM (Random Access Memory) 12, a communication device 18, a display interface 14, a manipulation part 15, a storage device 16, and a media controller 17. The CPU 10 is an arithmetic device that controls the whole controller 100. A program executed by the CPU 10 is stored in the ROM 11. The RAM 12 acts as a working area when the CPU 10 executes the program. The communication device 18 is constructed by a modem that conducts communication, such as reception of the detection output from the particle sensor 200 and transmission of control data to the FFU 300. The display interface 14 is an interface used to transmit image data to the monitor 111. The manipulation part 15 receives a manipulation input to the controller 100. The program executed by the CPU 10 is stored in the storage device 16. The media controller 17 accesses a storage medium 900 that is detachably attached to the controller 100, and reads or writes a file from and in the storage medium 900.

The display interface 14 may be constructed in a hardware manner by a board for a driver of the monitor 111, or the display interface 14 may be constructed in a software manner by software for the driver of the monitor 111. For example, the manipulation part 15 is constructed by input devices, such as a keyboard and a mouse. In the first embodiment, the manipulation part 15 is constructed by a touch sensor, and the manipulation part 15 is constructed as a touch panel while being integral with the monitor 111.

In the first embodiment, for example, the CPU 10 executes a proper program to implement at least a part of the functions of the controller 100 described herein.

At least a part of the program executed by the CPU 10 may be stored in the storage medium 900. Examples of the storage medium 900 in which the program is stored in a nonvolatile manner include a CD-ROM (Compact Disc-Read Only Memory), a DVD-ROM (Digital Versatile Disk-Read Only Memory), a USB (Universal Serial Bus) memory, a memory card, an FD (Flexible Disk), a hard disk, a magnetic tape, a cassette tape, an MO (Magnetic Optical Disc), an MD (Mini Disc), an IC (Integrated Circuit) card (except the memory card), an optical card, a mask ROM, an EPROM, and an EEPROM (Electronically Erasable Programmable Read-Only Memory).

Alternatively, the program executed by the CPU 10 may be downloaded through a network and installed in the storage device 16.

<Functional configuration>

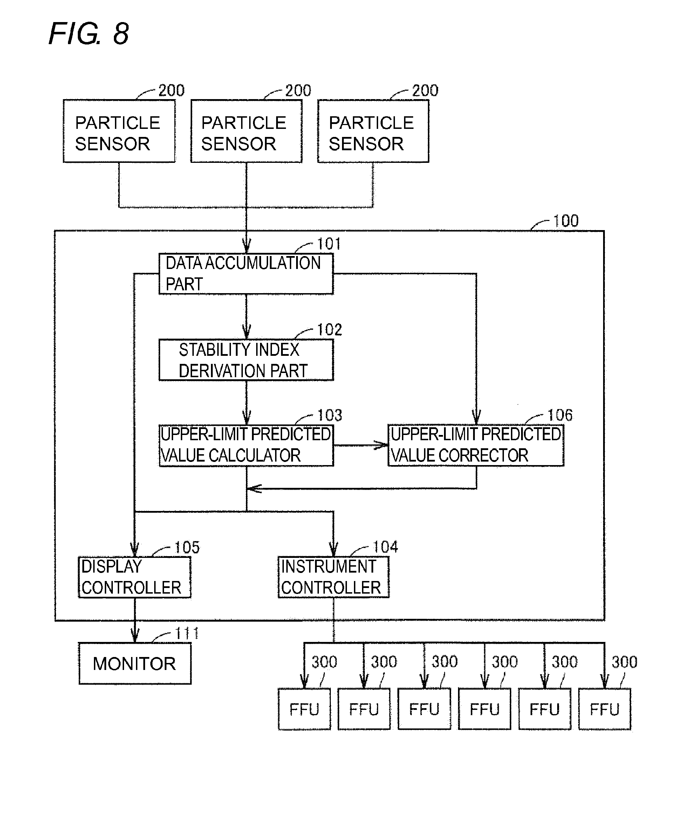

FIG. 8 is a view schematically illustrating a functional configuration of the controller 100.

Referring to FIG. 8, the controller 100 includes a data accumulation part 101, a stability index derivation part 102, an upper-limit predicted value calculator 103, an instrument controller 104, and a display controller 105. For example, the data accumulation part 101 is implemented by the RAM 12 and/or the storage device 16. For example, the CPU 10 executes a proper program to construct the upper-limit predicted value calculator 103, the instrument controller 104, and the display controller 105.

The data accumulation part 101 receives and accumulates the continuous detection output (status data) from the particle sensor 200.

The stability index derivation part 102 calculates a stability index (the standard deviation $\delta$) based on a history of the status data accumulated in the data accumulation part 101.

The upper-limit predicted value calculator 103 calculates the upper-limit predicted value using the stability index calculated by the stability index derivation part 102.

The instrument controller 104 properly transmits a control signal to the instrument (FFU 300) using the calculated upper-limit predicted value.

The display controller 105 transmits the pieces of data to the monitor 111 in order to display the status data accumulated in the data accumulation part 101, the real-time status data transmitted to the data accumulation part 101, and the upper-limit predicted value calculated by the upper-limit predicted value calculator 103.

The controller 100 further includes an upper-limit predicted value corrector 106. For example, the CPU 10 executes a proper program to construct the upper-limit predicted value corrector 106.

The upper-limit predicted value corrector 106 compares the measured value of the status data, which is input from the particle sensor 200 at a certain clock time, and the upper-limit predicted value, which is calculated by the upper-limit predicted value calculator 103 with respect to the clock time. The upper-limit predicted value corrector 106 corrects the upper-limit predicted value in the above mode when the status data is greater than the upper-limit predicted value. When the upper-limit predicted value is corrected, the instrument controller 104 controls the operation of the FFU 300 using the post-correction upper-limit predicted value. As described above, the upper-limit predicted value corrector 106 continuously corrects the upper-limit predicted value only for the predetermined period since the time point at which the status data is greater than the upper-limit predicted value. After the period elapses, the instrument controller 104 controls the operation of the FFU 300 based on the upper-limit predicted value calculated by the upper-limit predicted value calculator 103.

<Control Flow of Instrument>

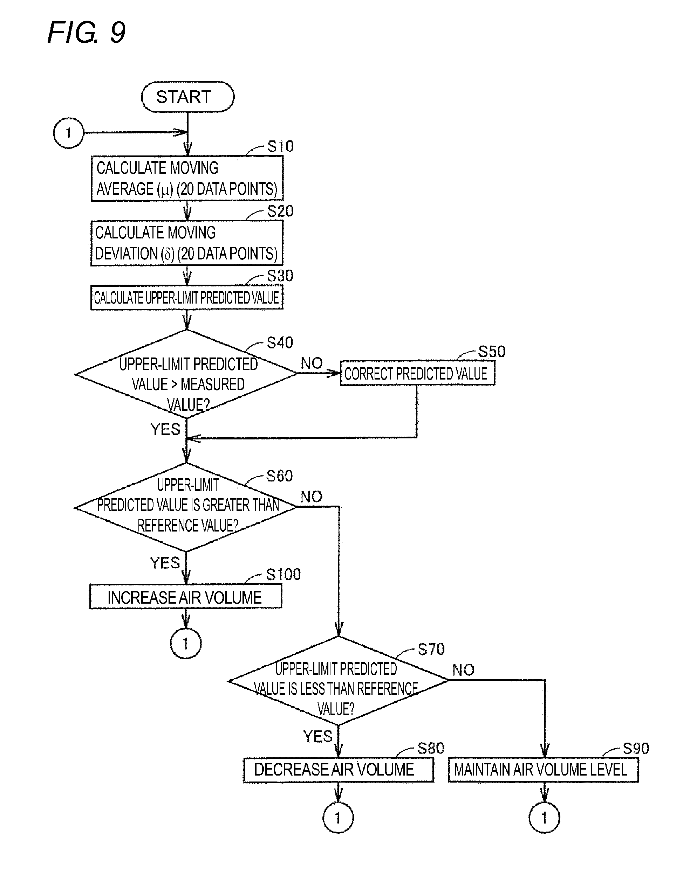

FIG. 9 is a flowchart of processing of controlling the FFU 300, which is performed by the controller 100.

Referring to FIG. 9, the CPU 10 calculates the moving average $\mu$ of the status data in the period using the pieces of past status data for the setup period at the time point in Step S10. Then the CPU 10 goes to processing in Step S20. In Step S10, for example, the moving average $\mu$ is calculated using the pieces of status data at 20 points included in the setup period.

In Step S20, the CPU 10 calculates the moving deviation $\delta$ using the pieces of past status data used to calculate the moving average $\mu$ in Step S10. Then the CPU 10 goes to processing in Step S30.

In Step S30, the CPU 10 calculates the upper-limit predicted value with respect to the status data at that time point using the moving average $\mu$ calculated in Step S10 and the moving deviation $\delta$ calculated in Step S20. Then the CPU 10 goes to processing in Step S40.

In Step S40, the CPU 10 determines whether the status data received from the particle sensor 200 at that time point is less than the upper-limit predicted value calculated at that time point in Step S30. When the status data is less than the upper-limit predicted value, the CPU 10 goes to processing in Step S60. When the status data is greater than or equal to the upper-limit predicted value, the CPU 10 goes to processing in Step S50.

In Step S50, the CPU 10 corrects the upper-limit predicted value in the above manner. Then the CPU 10 goes to processing in Step S60.

In Step S60, the CPU 10 determines whether the upper-limit predicted value is greater than the reference value (the reference value SV in FIG. 3). The CPU 10 goes to processing in Step S100 when the upper-limit predicted value is greater than the reference value, and the CPU 10 goes to processing in Step S70 when the upper-limit predicted value is less than or equal to the reference value.

In Step S100, the CPU 10 transmits the control signal to the FFU 300 in order to increase an air volume. Then the CPU 10 returns to the processing in Step S10.

On the other hand, in Step S70, the CPU 10 determines whether the upper-limit predicted value is less than the reference value. The CPU 10 goes to processing in Step S80 when the upper-limit predicted value is less than the reference value, and the CPU 10 goes to processing in Step S90 when the upper-limit predicted value is equal to the reference value.

In Step S80, the CPU 10 transmits the control signal to the FFU 300 in order to decrease the air volume. Then the CPU 10 returns to the processing in Step S10. On the other hand, in Step S90, the CPU 10 performs the processing of maintaining an air volume level of the FFU 300. Then the CPU 10 returns to the processing in Step S10.

According to the control processing of the first embodiment as described above, the upper-limit predicted value is derived with respect to the status data detected by the particle sensor 200. Not the detected status data itself but the upper-limit predicted value is compared to the reference value. Depending on a comparison result, the operation (air volume level) of the FFU 300 is controlled such that the cleanliness in the clean booth 500 is maintained at the reference value or less.

<Summary>

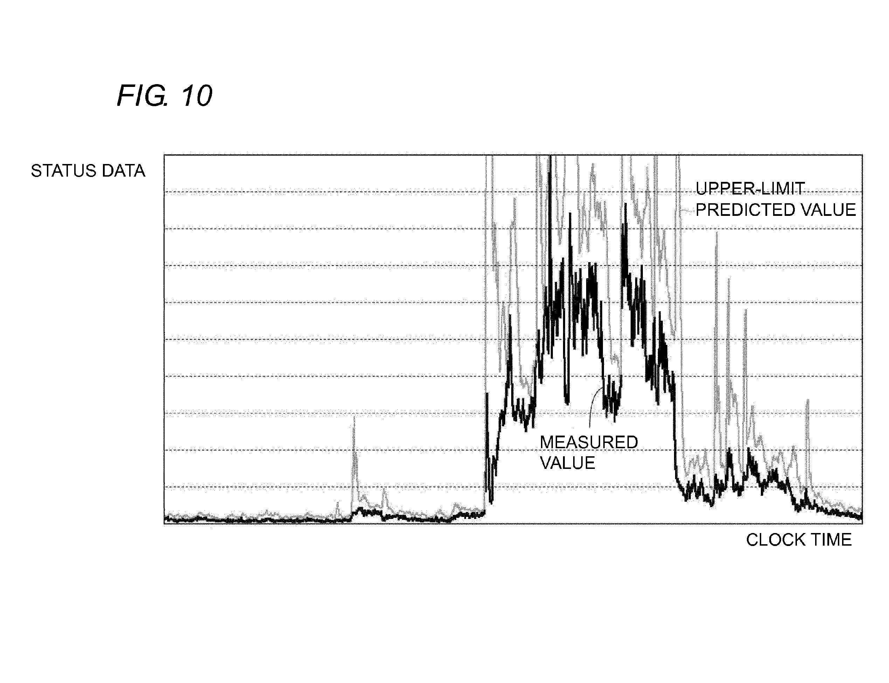

FIG. 10 is a view illustrating examples of the measured value of the detection output of the particle sensor 200 and the upper-limit predicted value calculated based on the measured value in the production system in which the operation of the FFU 300 is controlled by the controller 100 of the first embodiment.

As can be seen from FIG. 10, the calculated upper-limit predicted value is always located above the measured value. As described above, the upper-limit predicted value is calculated using the standard deviation $\delta$. Therefore, a difference between the measured value and the upper-limit predicted value depends on magnitude of a variation of the measured values in the last setup period with respect to each point. Specifically, in the case that the measured values vary largely in the last setup period, the upper-limit predicted value is calculated as a value having a relatively large allowance with respect to the measured value. On the other hand, in the case that the measured values vary small in the last setup period, the upper-limit predicted value is calculated as a value relatively close to the measured value.

That is, according to the first embodiment, in the case that turbulence of the measured value is generated due to the disturbance, the value having the relatively large allowance with respect to the measured value is calculated as the upper-limit predicted value. Therefore, according to the first embodiment, the predicted value can be calculated in consideration of the influence of the disturbance. Accordingly, in the case of the large disturbance, the control of the instrument can be implemented with the allowance.

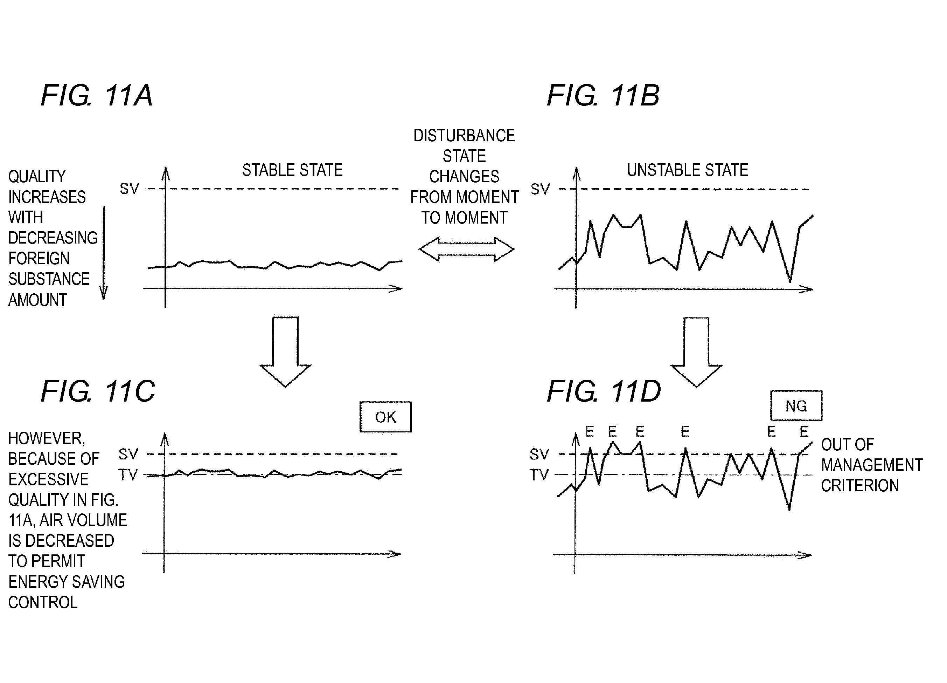

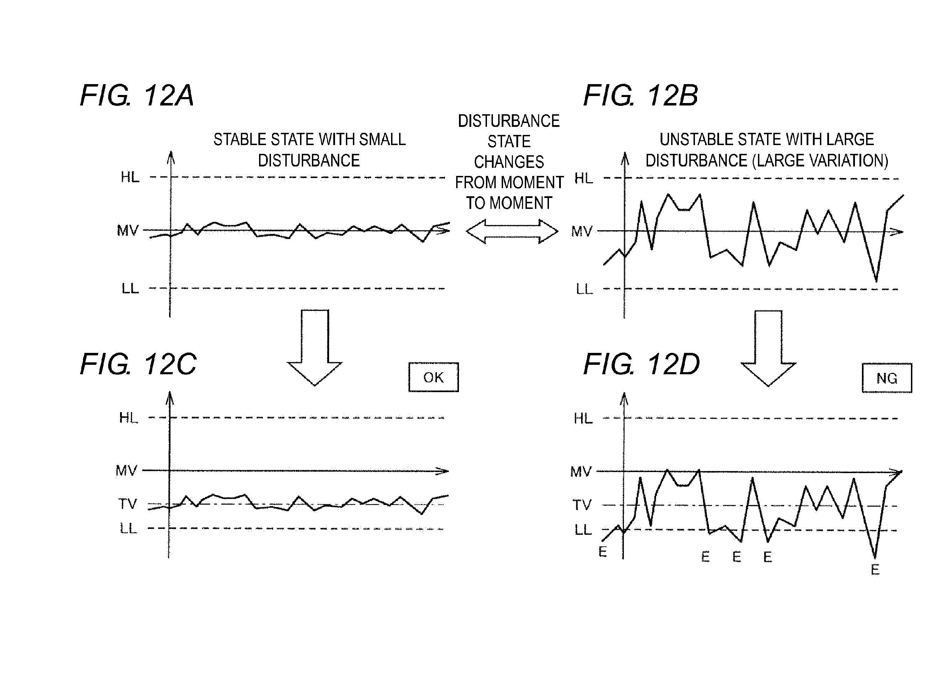

According to the first embodiment, the upper-limit predicted value is calculated in real time, and the instrument is controlled using the upper-limit predicted value and the reference value. Therefore, the operation of the instrument is controlled such that the operating amount of the instrument is suppressed to the minimum within a lean range. The control of the instrument operation will be more specifically described with reference to FIGS. 11 and 12 that illustrate a behavior of a system of a comparative example.

FIGS. 11A to 11D illustrate a control mode of the system in which the reference value is set only to the upper side with respect to the status data.

FIG. 11A illustrates the time change of the status data in the case of the small disturbance to the system, namely, in the case that the system is controlled in a relatively stable environment. In the situation, the status data changes relatively small. Accordingly, in the case that the status data relatively has the allowance with respect to the reference value SV, as illustrated in FIG. 11C, it is conceivable that the control is relaxed such that the average value TV of the status data is brought closer to the reference value SV. As used herein, "the control is relaxed" means control in which energy (electric power or the like) supplied to the instrument to maintain the system is decreased. More specifically, for example, in the case that the FFU 300 is used as the instrument, the amount of current supplied to the FFU 300 is reduced to decrease the number of revolutions of the fan of the FFU 300.

However, in the comparative example, in the case that the control in which the influence of the disturbance is considered is not performed unlike the first embodiment, the influence of the disturbance cannot be acquired even if the status data varies largely due to the influence of the disturbance as illustrated in FIG. 11B. When the control is relaxed without acquiring the influence of the disturbance, possibly the status data is greater than the reference value as illustrated in FIG. 11D. In FIG. 11D, a point at which the status data is greater than the reference value is indicated by "E".

FIGS. 12A to 12D illustrate a control mode of the system in which the reference values are set to both the upper side and the lower side with respect to the status data. In each of FIG. 12A to 12D, HL is the reference value on the upper limit side, and LL is the reference value on the lower limit side.

In this case, when the influence of the disturbance is not considered unlike the first embodiment, the control mode cannot be changed even if the status data is stable as illustrated in FIG. 12A, or even if the status data varies largely due to the influence of the disturbance as illustrated in FIG. 12B. In the case as illustrated in FIG. 12A, although the control of the status data can be relaxed to vary the status data onto the lower side as illustrated in FIG. 12C, the control cannot be relaxed because the state in FIG. 12A and the state in FIG. 12B cannot be distinguished from each other. This is because, as illustrated in FIG. 12D, possibly a state in which the status data is less than the reference value LL is generated as a result of relaxing the control from the state in FIG. 12B.

On the other hand, in the first embodiment, the prediction range is derived in real time in consideration of the influence of the disturbance, and the instrument is controlled based on the relationship between the prediction range and the reference value. Therefore, because the instrument can be controlled in consideration of the variation of the status data due to the influence of the disturbance, the control is relaxed with zero waste to efficiently suppress the consumption energy of the instrument, and the status data can surely be avoided from the exceedance of the reference value.

[Second Embodiment]

<Outline of Control>

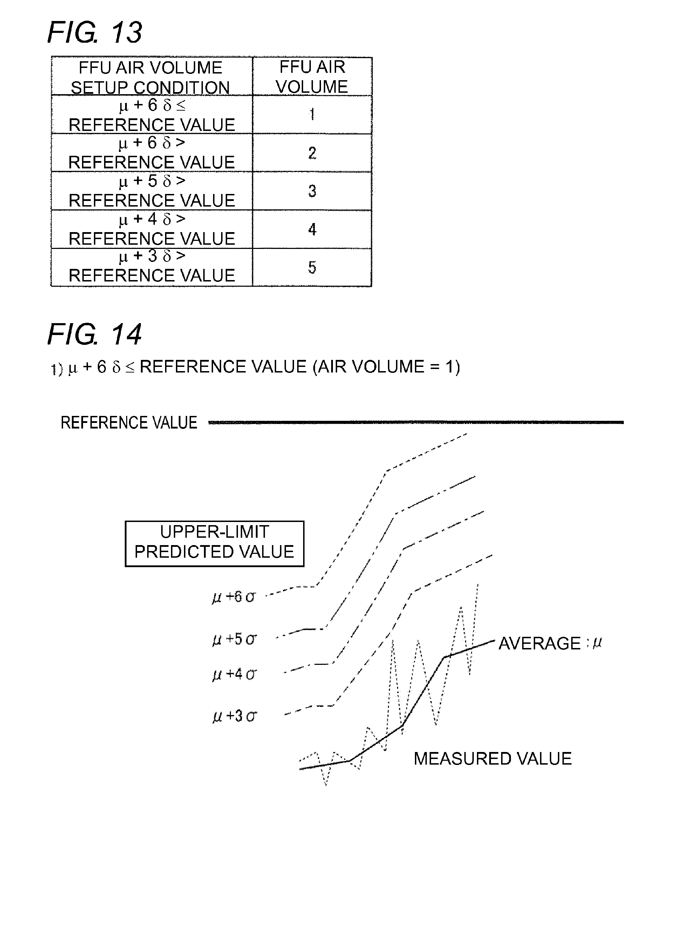

In a second embodiment, plural predicted values are derived in a stepwise manner in the control of the instrument (FFU 300), which is implemented by the controller 100. FIG. 13 is a view illustrating an outline of the control of the second embodiment.

FIG. 13 illustrates a setup condition of the fan of the FFU 300 and the air volume in which the fan is controlled. In FIG. 13, similarly to the first embodiment, there is explained a case where the reference value is set only to the upper side.

In the second embodiment, the plural predicted values, which are calculated using the moving average $\mu$ and the moving deviation $\delta$ obtained as described above, and the reference value are compared, and the air volume of the FFU 300 is decided based on the comparison result.

Specifically, plural predicted values ("$\mu + 6\delta$", "$\mu + 5\delta$", "$\mu + 4\delta$", and "$\mu + 3\delta$") having different probabilities in each of which the status data reaches the upper-limit predicted value are derived. The predicted values "$\mu + 6\delta$", "$\mu + 5\delta$", "$\mu + 4\delta$", and "$\mu + 3\delta$" are arrayed in the ascending order of the probability that the status data reaches the upper-limit predicted value. That is, the predicted value "$\mu + 6\delta$" has the lowest probability that the status data reaches the upper-limit predicted value, and the predicted value "$\mu + 3\delta$" has the lowest probability that the status data reaches the upper-limit predicted value.

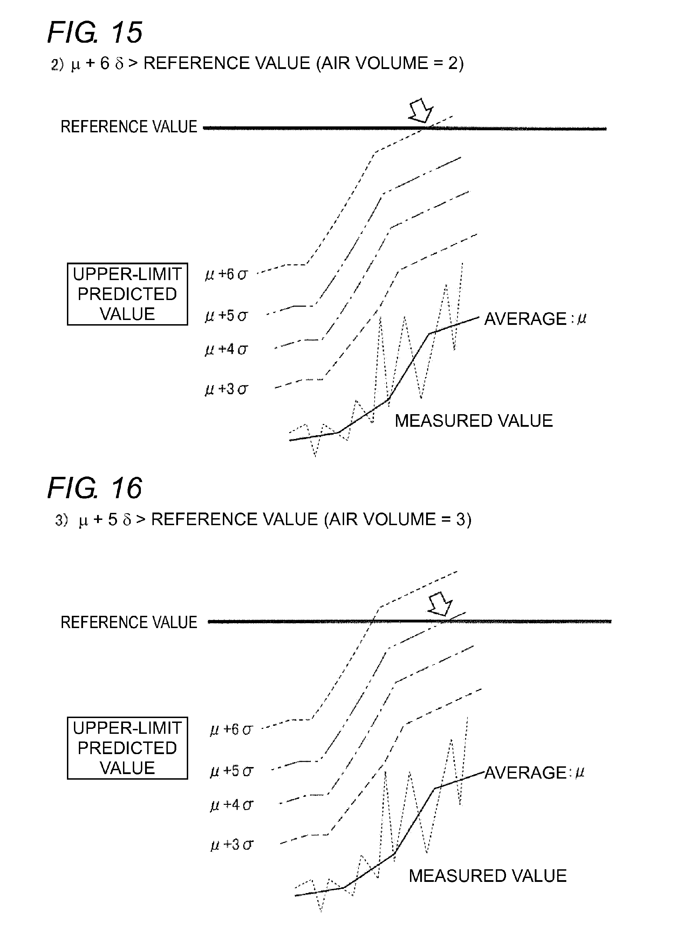

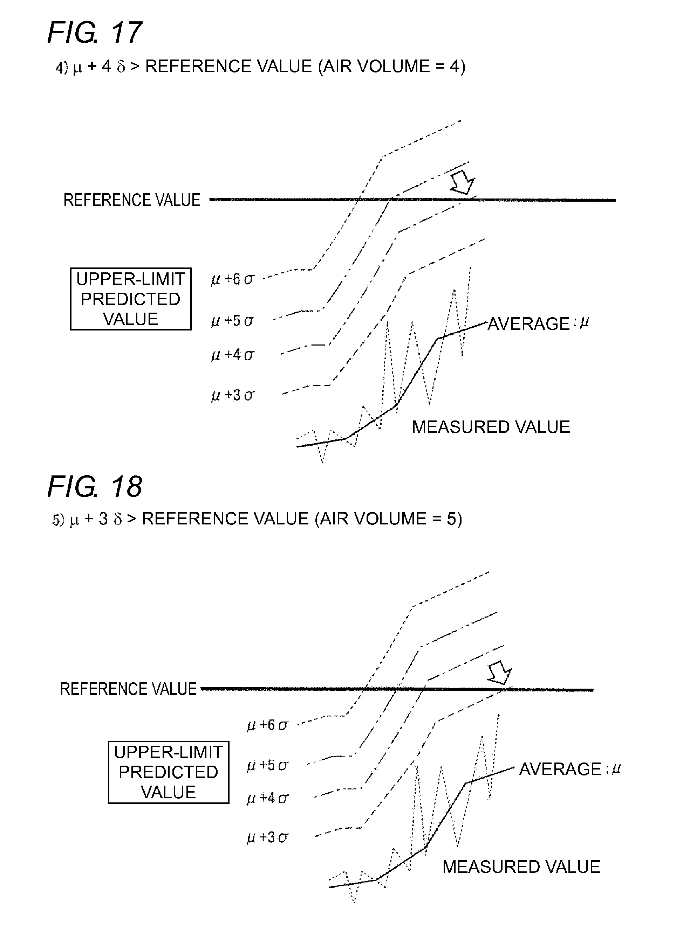

As illustrated in FIG. 14, in the case that "$\mu + 6\delta$" is less than or equal to the reference value, the air volume of the FFU 300 is controlled to the minimum level of "1". As illustrated in FIG. 15, in the case that "$\mu + 6\delta$" is greater than the reference value and is less than or equal to "$\mu + 5\delta$", the air volume of the FFU 300 is controlled to a level of "2" higher than the level of "1". As illustrated in FIG. 16, in the case that "$\mu + 5\delta$" is greater than the reference value and is less than or equal to "$\mu + 4\delta$", the air volume of the FFU 300 is controlled to a level of "3" higher than the level of "2". As illustrated in FIG. 17, in the case that "$\mu + 4\delta$" is greater than the reference value and is less than or equal to "$\mu + 3\delta$", the air volume of the FFU 300 is controlled to a level of "4" higher than the level of "3". As illustrated in FIG. 18, in the case that "$\mu + 3\delta$" is greater than the reference value, the air volume of the FFU 300 is controlled to the maximum level of "5". In FIGS. 15 to 18, a point at which each predicted value exceeds the reference value is indicated by an outline arrow.

In the second embodiment, that the air volume of the FFU 300 has the "high" level means that the amount of energy consumed by the FFU 300 is increased to rotate the fan of the FFU 300 at a higher speed.

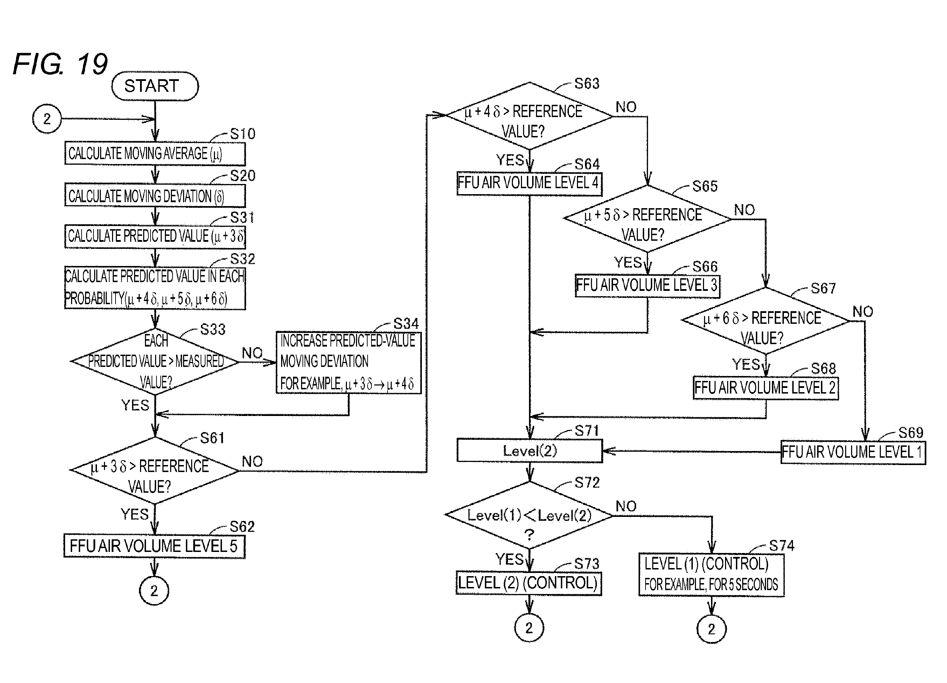

FIG. 19 is a flowchart of processing of controlling the number of revolutions of the FFU 300 of the second embodiment.

Referring to FIG. 19, in the second embodiment, the CPU 10 calculates the moving average of the pieces of status data for the period using the pieces of past status data for the setup period from that time point in Step S10, and the CPU 10 calculates the moving deviation $\delta$ using the pieces of past status data, which are used to calculate the moving average $\mu$ in Step S10, in Step S20.

In Step S31, the CPU 10 calculates the upper-limit predicted value ($\mu + 3\delta$) with respect to the status data at that time using the moving average $\mu$ calculated in Step S10 and the moving deviation $\delta$ calculated in Step S20. Then the CPU 10 goes to processing in Step S32.

In Step S32, the CPU 10 calculates the upper-limit predicted values ("$\mu + 6\delta$", "$\mu + 5\delta$", and "$\mu + 4\delta$"), which have the low probabilities that the status data reaches the upper-limit predicted values compared with the upper-limit predicted value calculated in Step S31. Then the CPU goes to processing in Step S33.

Hereinafter, "$\mu + 3\delta$" calculated in Step S31 is referred to as a first upper-limit predicted value, and "$\mu + 4\delta$", "$\mu + 5\delta$", and "$\mu + 6\delta$", which are calculated in Step S32, are referred to as a second upper-limit predicted value, a third upper-limit predicted value, and a fourth upper-limit predicted value, respectively.

In Step S33, the CPU 10 determines whether the predicted values calculated in Steps S31 and S32 are greater than the measured value. When at least one of the predicted values is less than or equal to the measured value, the CPU 10 goes to processing in Step S34. When all the predicted values are greater than the measured value, the CPU 10 goes to processing in Step S61.

In Step S34, the CPU 10 corrects the predicted value which is less than or equal to the measured value such that the moving deviation $\delta$ is added to the predicted value. Then the CPU 10 goes to processing in Step S61. For example, in the case that the measured value is greater than the second upper-limit predicted value, the third upper-limit predicted value, and the fourth upper-limit predicted value, the second upper-limit predicted value, the third upper-limit predicted value, and the fourth upper-limit predicted value are updated to "$\mu + 4\delta + \delta$ (that is, $\mu + 5\delta$)", "$\mu + 5\delta + \delta$ (that is, $\mu + 6\delta$)", and "$\mu + 6\delta + \delta$ (that is, $\mu + 7\delta$)", respectively.

In Step S61, the CPU 10 determines whether the first upper-limit predicted value is greater than the reference value. When the first upper-limit predicted value is not greater than the reference value, namely, when the first upper-limit predicted value is less than or equal to the reference value, the CPU 10 goes to processing in Step S63. On the other hand, when the first upper-limit predicted value is greater than the reference value, the CPU 10 goes to processing in Step S62.

In Step S62, the CPU 10 sets the air volume of the FFU 300 to the maximum level (level = 5). Then the CPU 10 returns to the processing in Step S10. Therefore, the air volume of the FFU 300 is changed to the level of "5".

In Step S63, the CPU 10 determines whether the second upper-limit predicted value is greater than the reference value. When the second upper-limit predicted value is not greater than the reference value, namely, when the second upper-limit predicted value is less than or equal to the reference value, the CPU 10 goes to processing in Step S65. On the other hand, when the second upper-limit predicted value is greater than the reference value, the CPU 10 goes to processing in Step S64.

In Step S64, the CPU 10 sets the air volume of the FFU 300 to the level of "4". Then the CPU 10 goes to processing in Step S71.

In Step S65, the CPU 10 determines whether the third upper-limit predicted value is greater than the reference value. When the third upper-limit predicted value is not greater than the reference value, namely, when the third upper-limit predicted value is less than or equal to the reference value, the CPU 10 goes to processing in Step S67. On the other hand, when the third upper-limit predicted value is greater than the reference value, the CPU 10 goes to processing in Step S66.

In Step S66, the CPU 10 sets the air volume of the FFU 300 to the level of "3". Then the CPU 10 goes to the processing in Step S71.

In Step S67, the CPU 10 determines whether the fourth upper-limit predicted value is greater than the reference value. When the fourth upper-limit predicted value is not greater than the reference value, namely, when the fourth upper-limit predicted value is less than or equal to the reference value, the CPU 10 goes to processing in Step S69. On the other hand, when the fourth upper-limit predicted value is greater than the reference value, the CPU 10 goes to processing in Step S68.

In Step S68, the CPU 10 sets the air volume of the FFU 300 to the level of "2". Then the CPU 10 goes to the processing in Step S71.

In Step S71, the CPU 10 sets the air volume level of the FFU 300, which are set in Steps S64, S66, S68, and S69, to a level (2). Then the CPU 10 goes to processing in Step S72. At this point, the current air volume level of the FFU 300 is set to a level (1).

In Step S72, the CPU 10 determines whether the level (2) is greater than the level (1). When the level (2) is greater than the level (1), the CPU 10 goes to processing in Step S73. When the level (2) is not greater than the level (1), namely, when the newly-set air volume level is less than or equal to the current air volume level, the CPU 10 goes to processing in Step S74.

In Step S73, the CPU 10 changes the air volume of the FFU 300 to the level that is set in one of Steps S64, S66, S68, and S69. Then the CPU 10 returns to the processing in Step S10. Therefore, the air volume of the FFU 300 is changed to the level that is set in one of Steps S64, S66, S68, and S69.

In Step S74, the CPU 10 maintains the air volume of the FFU 300 at the current level (level (1)) for 5 seconds, and then changes the air volume of the FFU 300 to the level (level (2)) that is set in one of Steps S64, S66, S68, and S69. Then the CPU 10 returns to the processing in Step S10. Therefore, the air volume of the FFU 300 is changed to the level, which is set in one of Steps S64, S66, S68, and S69, after being maintained at the current level for 5 seconds.

(Example)

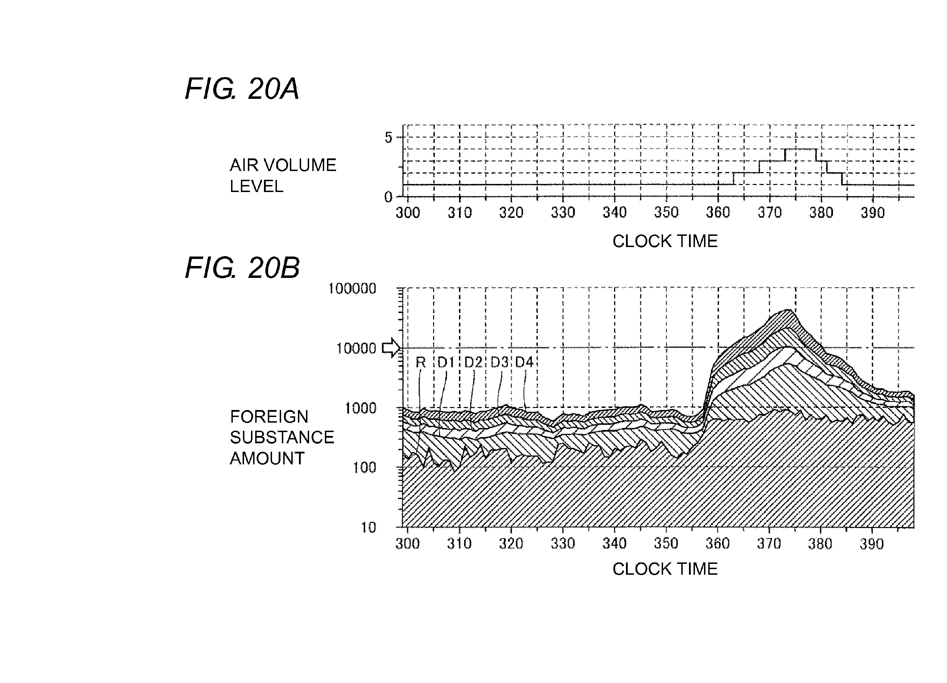

FIGS. 20A and 20B are views illustrating specific examples of the time change of the measured value of the status data, the first to fourth upper-limit predicted values, and the air volume level of the FFU 300. FIG. 20A illustrates time change of the air volume level, and FIG. 20B illustrates the measured value and predicted values of the status data.

In the graph in FIG. 20B, the amount of foreign substance included per unit volume, which is detected by the particle sensor 200, is illustrated as a specific example of the status data. For the foreign substance amount, the measured value is indicated by a line R, the first upper-limit predicted value is indicated by a line D1, the second upper-limit predicted value is indicated by a line D2, the third upper-limit predicted value is indicated by a line D3, and the fourth upper-limit predicted value is indicated by a line D4. In the graphs in FIGS. 20A and 20B, a horizontal axis indicates the clock time, for example, indicates the number of seconds elapsing since the start of the measurement. In the graph in FIG. 20B, the reference value is indicated by an alternate long and short dash line.

Referring to FIGS. 20A and 20B, the fourth upper-limit predicted value is greater than the reference value at the clock time of 363 seconds. Therefore, the air volume level of the FFU 300 changes from 1 to 2 at the clock time of 363 seconds.

The third upper-limit predicted value is greater than the reference value at the clock time of 368 seconds. Therefore, the air volume level of the FFU 300 changes from 2 to 3 at the clock time of 369 seconds.

The second upper-limit predicted value is greater than the reference value at the clock time of 373 seconds. Therefore, the air volume level of the FFU 300 changes from 3 to 4 at the clock time of 373 seconds.

The second upper-limit predicted value is less than the reference value at the clock time of 374 seconds. However, through the processing in Step S74, the air volume level of the FFU 300 changes from 4 to 3 after 5 seconds from the clock time of 374 seconds, namely, at the clock time of 379 seconds.

The third upper-limit predicted value is less than the reference value at the clock time of 376 seconds, and the air volume level of the FFU 300 changes from 3 to 2 after 5 seconds from the clock time of 376 seconds, namely, at the clock time of 381 seconds.

The fourth upper-limit predicted value is less than the reference value at the clock time of 379.5 seconds, and the air volume level of the FFU 300 changes from 2 to 1 after 5 seconds from the clock time of 379.5 seconds, namely, at the clock time of 384.5 seconds.

[Third Embodiment]

In a third embodiment, the system control apparatus is used to control the production system in which a temperature is controlled.

<System configuration>

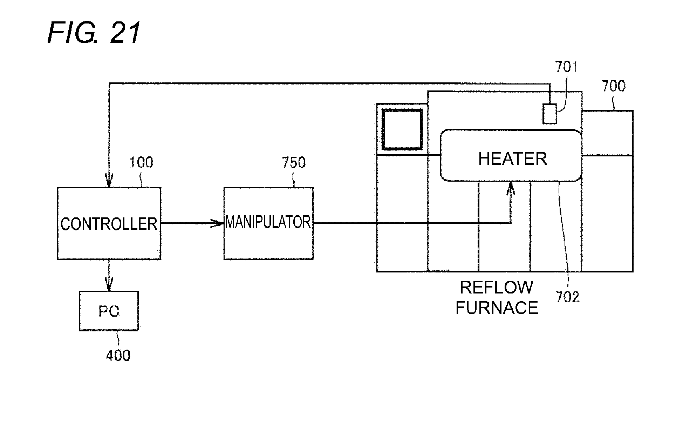

FIG. 21 is a view schematically illustrating a configuration of a production system of the third embodiment.

Referring to FIG. 21, the production system includes a reflow furnace 700, and air in the reflow furnace 700 is heated by a heater 702. The controller 100 decides a control content of an output of the heater 702 based on a detection output of a temperature sensor 701 that detects a temperature in the reflow furnace 700. The controller 100 controls the output of the heater 702 through a manipulator 750.

In the third embodiment, the controller 100 is connected to a Personal Computer (PC) 400. In the third embodiment, based on detection temperature of the temperature sensor 701, which is output from the controller 100, the PC 400 simulates safety of the production system and displays a simulation result.

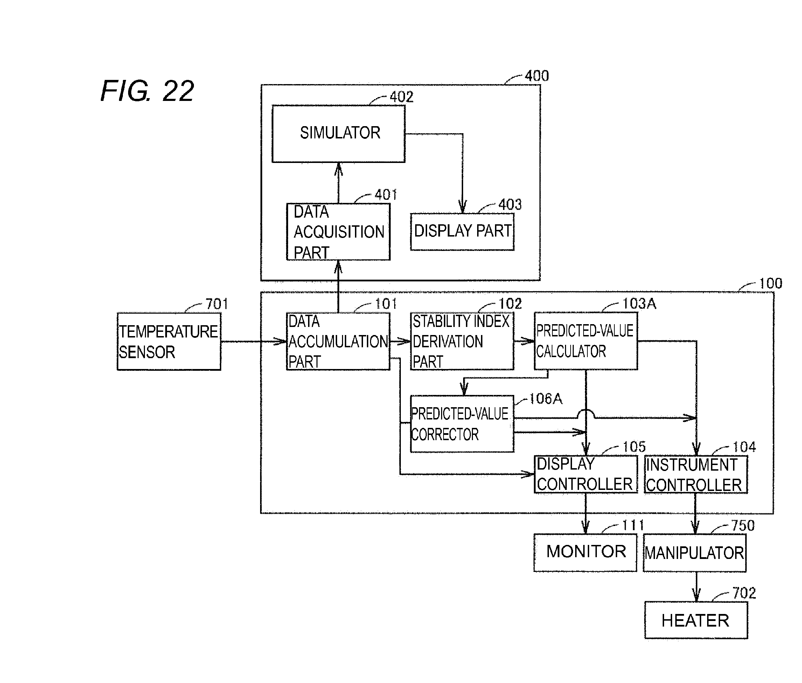

FIG. 22 is a block diagram of the production system of the third embodiment.

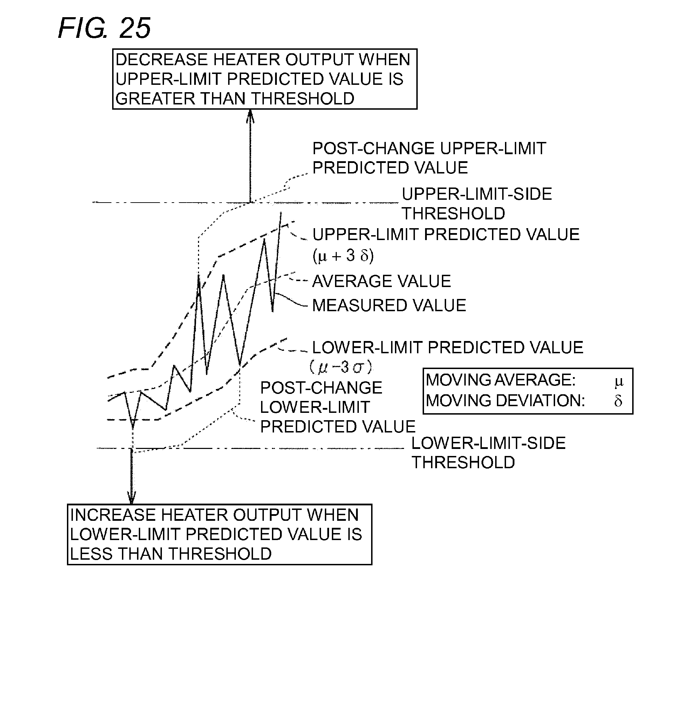

Referring to FIG. 22, similarly to the first embodiment, the controller 100 includes the data accumulation part 101, the stability index derivation part 102, the instrument controller 104, and the display controller 105. In the third embodiment, the controller 100 includes a predicted value calculator 103A and a predicted value corrector 106A instead of the upper-limit predicted value calculator 103 and the upper-limit predicted value corrector 106. The predicted value calculator 103A calculates the upper-limit predicted value and the lower-limit predicted value with respect to the status data similarly to the first embodiment described with reference to FIG. 3 and the like. The predicted value corrector 106A corrects the upper-limit predicted value and the lower-limit predicted value, which will be described later with reference to FIG. 25.

In the third embodiment, the data accumulation part 101 transmit the measured value of the status data and the upper-limit predicted value to the PC 400.

The PC 400 includes a data acquisition part 401, a simulator 402, and a display part 403.

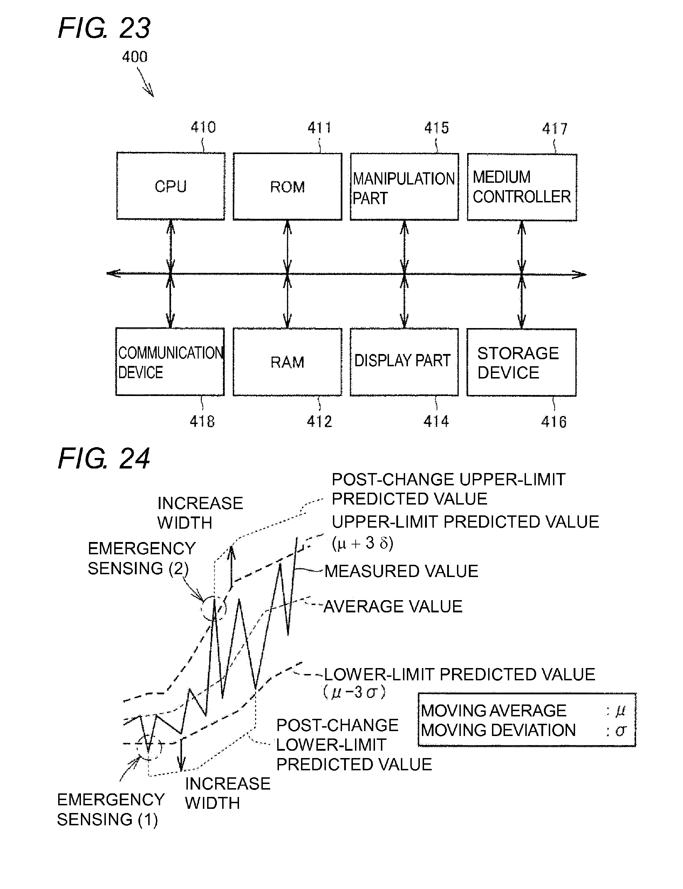

Referring to FIG. 23, the PC 400 includes a CPU 410, a ROM 411, a RAM 412, a communication device 418, a display part 414, a manipulation part 415, a storage device 416, and a medium controller 417. The CPU 410 is an arithmetic device that controls the whole PC 400. A program executed by the CPU 410 is stored in the ROM 411. The RAM 412 acts as a working area when the CPU 410 executes the program.
The communication device 418 is constructed by a modem that conducts communication with other instruments, such as the controller 100. The display part 414 is constructed by display devices, such as a liquid crystal display device. The manipulation part 415 receives a manipulation input to the PC 400. The program executed by the CPU 410 is stored in the storage device 416. The media controller 417 accesses a storage medium that is detachably attached to the PC 400, and reads or writes a file from and in the storage medium.

At least a part of the program executed by the CPU 410 may be stored in the storage medium. Examples of the storage medium in which the program is stored in a nonvolatile manner include a CD-ROM, a DVD-ROM, a USB memory, a memory card, an FD, a hard disk, a magnetic tape, a cassette tape, an MO, an MD, an IC card (except the memory card), an optical card, a mask ROM, an EPROM, and an EEPROM. Alternatively, the program executed by the CPU 410 may be downloaded through a network and installed in the storage device 416.

The display part 403 is constructed by the display part 414. For example, the data acquisition part 401 is constructed by the communication device 418. For example, the CPU 410 executes a specific program to construct the simulator 402.

<Upper-limit predicted value and lower-limit predicted value>

In the third embodiment, an upper-limit-side reference value and a lower-limit-side reference value are set with respect to the temperature in the reflow furnace 700. In the third embodiment, the operation of the heater 702 is controlled such that the temperature in the reflow furnace 700 does not exceed the range between the upper-limit-side reference value and the lower-limit-side reference value.

In the third embodiment, the controller 100 acquires the detection temperature of the temperature sensor 701 as the status data. As illustrated in FIG. 24, similarly to the first embodiment, the controller 100 derives the upper-limit predicted value and the lower-limit predicted value based on the history of the detection temperature, the moving average $\mu$, and the moving deviation $\delta$. FIG. 24 illustrates the measured value, the upper-limit predicted value, and the lower-limit predicted value of the status data, which change from moment to moment. In the third embodiment, the predicted value is corrected in the case that the measured value is greater than the predicted value. Specifically, when the measured value is less than the lower-limit predicted value, the lower-limit predicted value is changed downward ("emergency sensing (1)" in FIG. 24). When the measured value is greater than the upper-limit predicted value, the upper-limit predicted value is changed upward ("emergency sensing (2) in FIG. 24).

As illustrated in FIG. 25, in the third embodiment, the operation of the heater 702 is controlled based on a relationship between the upper-limit predicted value and the upper-limit-side reference value and a relationship between the lower-limit predicted value and the lower-limit-side reference value.

Specifically, the output of the heater 702 increases when the lower-limit predicted value is less than the lower-limit-side reference value ("lower-limit-side threshold" in FIG. 25). The increase of the output of the heater 702 means that the energy consumed by the heater 702 is increased to improve heating performance of the heater 702.

The output of the heater 702 decreases when the upper-limit predicted value is greater than the upper-limit-side reference value ("upper-limit-side threshold" in FIG. 25). The decrease of the output of the heater 702 means that the energy consumed by the heater 702 is decreased to reduce heating performance of the heater 702.

<Control Flow>

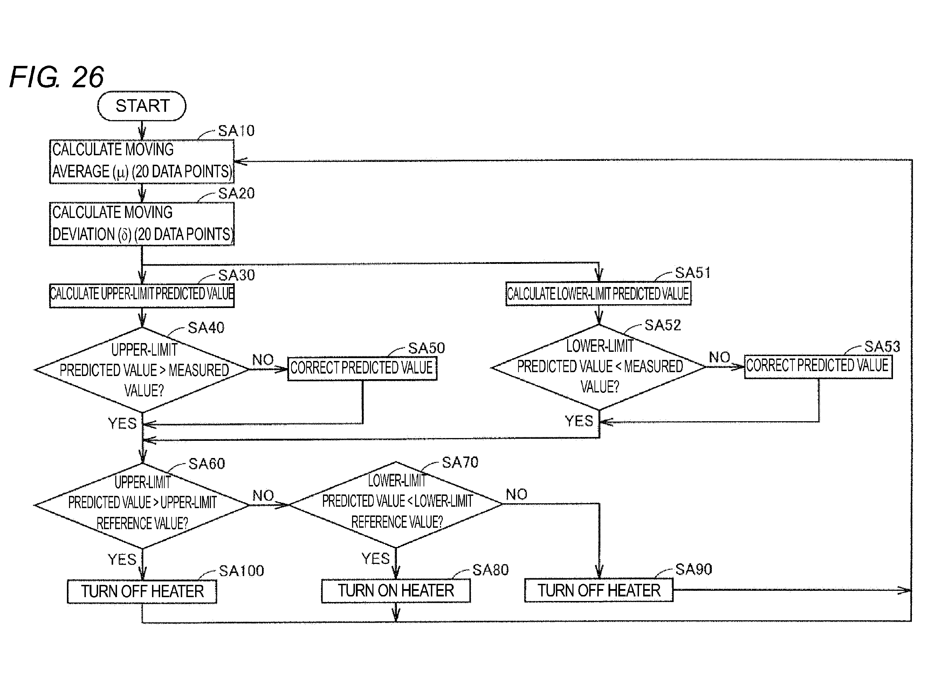

Referring to FIG. 26, the CPU 10 of the controller 100 calculates the moving average $\mu$ of the status data in the period using the pieces of past status data for the setup period at the time point in Step SA10. Then the CPU 10 goes to processing in Step SA20. In Step SA10, for example, the moving average $\mu$ is calculated using the pieces of status data at 20 points included in the setup period.

In Step SA20, the CPU 10 calculates the moving deviation $\delta$ using the pieces of past status data used to calculate the moving average $\mu$ in Step SA10. Then the CPU 10 goes to processing in Steps SA30 and SA51.

In Step SA30, the CPU 10 calculates the upper-limit predicted value with respect to the status data at that time point using the moving average $\mu$ calculated in Step SA10 and the moving deviation $\delta$ calculated in Step SA20. Then the CPU 10 goes to processing in Step SA40.

In Step SA40, the CPU 10 determines whether the status data received from the temperature sensor 701 at that time point is less than the upper-limit predicted value calculated at that time point in Step SA30. When the status data is less than the upper-limit predicted value, the CPU 10 goes to processing in Step SA60. When the status data is greater than or equal to the upper-limit predicted value, the CPU 10 goes to processing in Step SA50.

In Step SA50, the CPU 10 corrects the upper-limit predicted value in the above manner. Then the CPU 10 goes to processing in Step SA60.

In Step SA51, the CPU 10 calculates the lower-limit predicted value with respect to the status data at that time point using the moving average $\mu$ calculated in Step SA10 and the moving deviation $\delta$ calculated in Step SA20. Then the CPU 10 goes to processing in Step SA52.

In Step SA52, the CPU 10 determines whether the status data received from the temperature sensor 701 at that time point is greater than the lower-limit predicted value calculated at that time point in Step SA51. When the status data is greater than the lower-limit predicted value, the CPU 10 goes to the processing in Step SA60. When the status data is less than or equal to the lower-limit predicted value, the CPU 10 goes to processing in Step SA53.

In Step SA53, the CPU 10 corrects the lower-limit predicted value in the above manner. Then the CPU 10 goes to the processing in Step SA60.

In Step SA60, the CPU 10 determines whether the upper-limit predicted value is greater than the upper-limit-side reference value (the upper-limit-side threshold in FIG. 25). The CPU 10 goes to processing in Step SA100 when the upper-limit predicted value is greater than the upper-limit-side reference value, and the CPU 10 goes to processing in Step SA70 when the upper-limit predicted value is less than or equal to the upper-limit-side reference value.

In Step SA100, the CPU 10 controls the FFU 300 such that the output of the heater 702 is turned off. Then the CPU 10 returns to the processing in Step SA10.

In Step SA70, the CPU 10 determines whether the lower-limit predicted value is less than the lower-limit-side reference value (lower-limit-side threshold in FIG. 25). The CPU 10 goes to processing in Step SA80 when the lower-limit predicted value is less than the lower-limit-side reference value, and the CPU 10 goes to processing in Step SA90 when the upper-limit predicted value is greater than or equal to the lower-limit-side reference value.

In Step SA80, the CPU 10 controls the FFU 300 such that the output of the heater 702 is turned on. Then the CPU 10 returns to the processing in Step SA10.

On the other hand, in Step SA90, the CPU 10 controls the FFU 300 such that the output of the heater 702 is turned off. Then the CPU 10 returns to the processing in Step SA10.

<Control Result>

According to the control flow of the third embodiment with reference to FIG. 26, in the reflow furnace 700, the upper-limit and lower-limit predicted values are derived with respect to the detection temperature based on the detection temperature of the temperature sensor 701, which is of the status data. The operation of the heater 702 is controlled based on the relationship between the upper-limit predicted value and the upper-limit-side reference value and the relationship between the lower-limit predicted value and the lower-limit-side reference value.

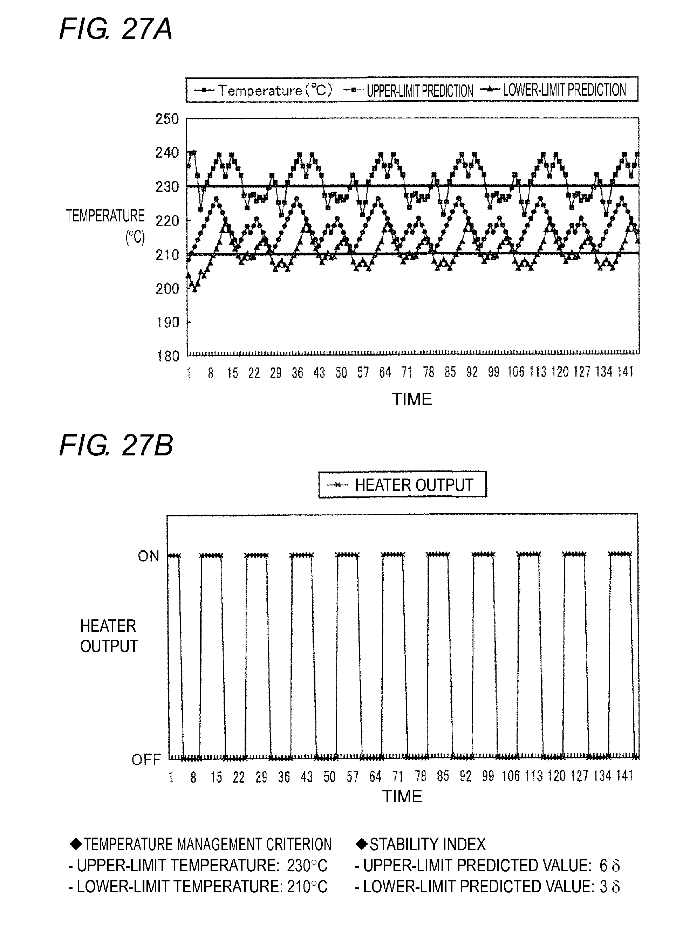

FIG. 27A and 27B are views illustrating an example of the control result of the third embodiment. FIG. 27A illustrates the time changes of the measured value (temperature) of the status data, the upper-limit predicted value, and the lower-limit predicted value. In FIG. 27A, the upper-limit-side reference value is set to 230°C, and the lower-limit-side reference value is set to 210°C. FIG. 27B illustrates an on/off switching state of the heater 702. In the reflow furnace 700, the output of the heater 702 is turned off when the upper-limit predicted value is greater than the upper-limit-side reference value. On the other hand, the output of the heater 702 is turned off when the upper-limit predicted value is less than or equal to the upper-limit-side reference value and when the lower-limit predicted value is less than the lower-limit-side reference value. The output of the heater 702 is turned off when the upper-limit predicted value is less than or equal to the upper-limit-side reference value and when the lower-limit predicted value is greater than or equal to the lower-limit-side reference value.

<Simulation in PC>

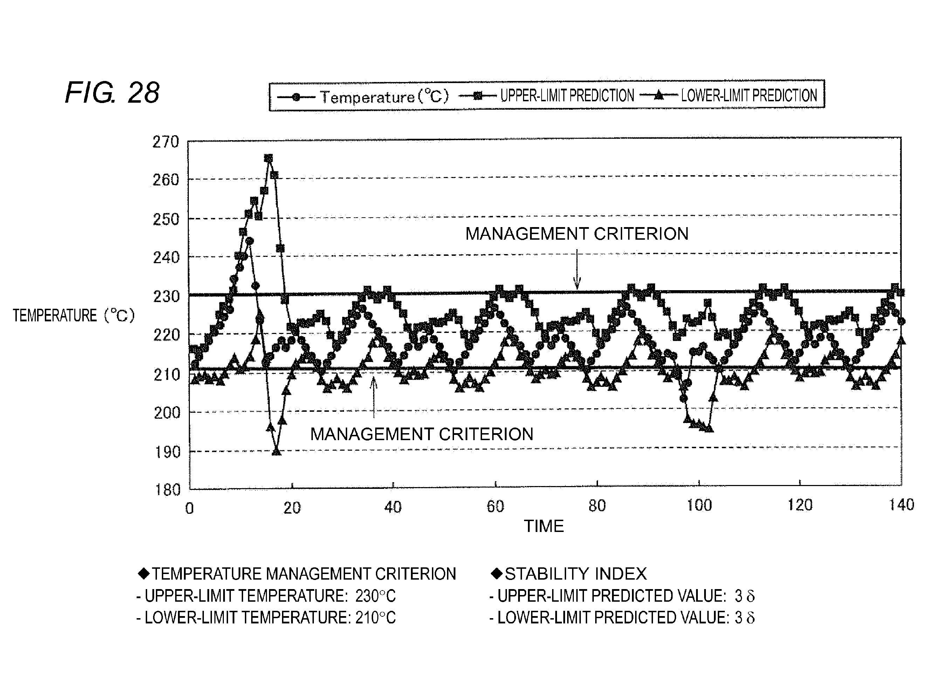

In the third embodiment, the PC 400 can acquire the measured value and the upper limit-side and lower limit-side reference values of the status data from the controller 100. For example, as illustrated in FIG. 28, these pieces of data are displayed as a graph on the display part 414.

The PC 400 can perform various simulations of the production system based on the pieces of information.

A degree of state safety in the production system can be cited as an example of the simulation.

A difference between the upper-limit predicted value and the measured value of the status data and a difference between the lower-limit predicted value and the measured value of the status data decrease when the production system is stable, and the differences increase when the production system becomes unstable due to the disturbance. Accordingly, the CPU 410 can perform various simulations while setting an integral value of the difference between the upper-limit predicted value and the measured value to a stability index of the production system.

The CPU 410 can display the index and the simulation result on the display part 414 or transmit the index and the simulation result to another instrument.

The above embodiments and variations thereof are described by way of example, and the present invention is not limited to the embodiments and variations. The scope of the present invention is defined by not the above description but claims, includes meanings equivalent to the claims and all the changes within the claims.

Values, such as a value calculated from a frequency distribution of the status data and a value in which a coefficient is multiplied by an average value, which are derived using not the standard deviation but statistical techniques, can be used to derive the stability index.

The target system may be the system related to the production of the product and the system that consumes the energy. In addition to the examples explained in the embodiments, the target system may be a system, in which an oxygen concentration is used as the status data in a nitrogen displacing furnace and nitrogen gas, which can be defined as secondary energy produced by consuming energy, is used as consumed energy. Additionally, a production system including a production apparatus provided with an air actuator and a vacuum chuck, the production system in which a pressure of compressed air produced as energy consumed in the production by a compressor is used as the status data can be cited as another example. A system in which a production apparatus that requires cooling water or hot water is used can be cited as still another example.
In the system, the status data is the temperature, and the energy used in the production is thermal energy consumed in an apparatus that produces the cooling water or the hot water. An air-conditioning system placed in production facilities, in which the temperature is used as the status data and consumed energy is used as power of an air conditioner, can be cited as still another example.

The embodiments and modifications thereof can solely be implemented, or implemented by a combination as needed basis.

## Claims

1. A system control apparatus that controls an operation of an instrument, the instrument consuming energy in order to adjust a state of a production system based on status data, the status data indicating a state that affects production quality of a product produced by the production system, the system control apparatus comprising:

   an acquisition part that continuously acquires the status data;
   a derivation part that continuously derives a stability index of the status data based on a time series of the status data;
   a prediction part that derives a prediction range, where the status data is predicted to change, based on the status data and the index; and
   a controller that controls the operation of the instrument based on the prediction range derived by the prediction part such that the status data falls within a reference range where the production quality is guaranteed.

2. The system control apparatus according to claim 1, wherein the derivation part obtains a moving standard deviation of the status data as the index based on the time series of the status data.

3. The system control apparatus according to claim 2, wherein the prediction part derives a plurality of the prediction ranges having different probabilities with which the status data reaches a predicted value.

4. The system control apparatus according to any one of claims 1 to 3, wherein the controller switches the operation of the instrument to a direction in which the status data is returned into the reference range in dropping off from the reference range, when at least a part of the prediction range drops off from the reference range.

5. The system control apparatus according to claim 3, wherein the controller switches the operation of the instrument every time each prediction range of the plurality of prediction ranges drops off from the reference range.

6. The system control apparatus according to any one of claims 1 to 5, further comprising a display controller that allows a display device to display a time change of the prediction range.

7. The system control apparatus according to claim 6, further comprising a part that, based on the prediction range, derives a ratio in which an upper-limit predicted value and/or a lower-limit predicted value of the prediction range exceeds the reference range, and predicts a risk that the status data exceeds the reference range.

8. The system control apparatus according to any one of claims 1 to 7, wherein the prediction part increases a prediction width to correct the prediction range only for a predetermined time when the status data exceeds the prediction range.

9. The system control apparatus according to any of the preceding claims,
   wherein the status data is output from a sensor that measures the status data; and
   the acquisition part is a reception part that continuously receives the status data.

10. A system control method for controlling an operation of an instrument, the instrument consuming energy in order to adjust a state of a production system based on status data, the status data being output from a sensor measuring the status data indicating a state that affects production quality of a product produced by the production system, the system control method comprising:

    a reception step of receiving continuously the status data;
    a derivation step of deriving continuously a stability index of the status data based on a time series of the status data;
    a prediction step of deriving a prediction range, where the status data is predicted to change, based on the status data and the index; and
    a control step of controlling the operation of the instrument based on the prediction range derived in the prediction step such that the status data falls within a reference range where the production quality is guaranteed.

11. The system control apparatus according to any of the claims 1 to 9,
    wherein the instrument is a filter fan;
    the state of the production system is an air cleanliness of a clean room;
    the status data represents an air cleanliness class, which indicates a state that affects production quality of a product produced in the clean room;
    the acquisition part is a particle sensor that acquires the air cleanliness class;
    the derivation part continuously derives a moving standard deviation of the air cleanliness class based on a time series of the acquired air cleanliness class;
    the prediction part derives a prediction range, where the air cleanliness class is predicted to change, based on a moving average value and the moving standard deviation of the air cleanliness class; and
    the controller controls the operation of the filter fan based on the prediction range derived by the prediction part such that the air cleanliness class falls within a reference range where the production quality is guaranteed.

**12.** The system control apparatus according to any of the claims 1 to 9,
wherein the instrument is a heater;
the state of the production system is a state in a furnace;
the status data represents a temperature, which indicates a state that affects production quality of a product produced in the furnace;
the acquisition part is a temperature sensor that acquires the temperature;
the derivation part continuously derives a moving standard deviation of the temperature based on a time series of the temperature;
the prediction part derives a prediction range, where the temperature is predicted to change, based on a moving average value and the moving standard deviation of the temperature; and
the controller controls the operation of the heater based on the prediction range derived by the prediction part such that the temperature falls within a reference range where the production quality is guaranteed.

FIG. 1
111
100
300
501
200
500

DATA POINT
SETUP PERIOD
STATUS DATA
TIME
12/1 12:14
12/1 12:15
12/1 23:59
12/2 00:00
12/31 10:00

FIG. 2

*FIG. 3*

STATUS DATA
SV
(REFERENCE VALUE)
MOVING AVERAGE :μ
MOVING DEVIATION :σ
PH: UPPER-LIMIT PREDICTED VALUE (μ+3σ)
RV: MEASURED VALUE
AV: AVERAGE VALUE
PL: LOWER-LIMIT PREDICTED VALUE (μ−3σ)
T1
T2
T3
CLOCK TIME

FIG. 4A

CLOCK TIME = T1
3σ 3σ
PROBABILITY
PL1 AV1 PH1
STATUS DATA

FIG. 4B

CLOCK TIME = T2
3σ 3σ
PROBABILITY
PL2 AV2 PH2
STATUS DATA

FIG. 4C

CLOCK TIME = T3
3σ 3σ
PROBABILITY
PL3 AV3 PH3
STATUS DATA

FIG. 5

STATUS DATA
SV
(REFERENCE VALUE)
POST-CHANGE UPPER-LIMIT
PHX: PREDICTED VALUE
UPPER-LIMIT
PH: PREDICTED VALUE
(μ+3σ)
RV: MEASURED VALUE
AV: AVERAGE VALUE
EMERGENCY SENSING
LOWER-LIMIT
PL: PREDICTED VALUE
(μ−3σ)
MOVING AVERAGE :μ
MOVING DEVIATION :σ
T1
T2
T3
CLOCK TIME

# FIG. 6

FUNDAMENTAL FORM OF STABILITY INDEX

$$PH = \left( \frac{1}{N} \sum_{i=t-N-1}^{t-1} y_i \right) + A \left( \frac{1}{N} \sum_{i=t-N-1}^{t-1} \sigma_i \right) \quad \cdots (3A)$$

$$PL = \left( \frac{1}{N} \sum_{i=t-N-1} y_i \right) - A \left( \frac{1}{N} \sum_{i=t-N-1} \sigma_i \right) \quad \cdots (3B)$$

AMPLIFICATION OF STABILITY INDEX

$$PHX = \left( \frac{1}{N} \sum_{i=t-N-1}^{t-1} y_i \right) + A1 \left( \frac{1}{N} \sum_{i=t-N-1}^{t-1} \sigma_i \right) \quad \cdots (4A)$$

$$PLX = \left( \frac{1}{N} \sum_{i=t-N-1}^{t-1} y_i \right) - A1 \left( \frac{1}{N} \sum_{i=t-N-1}^{t-1} \sigma_i \right) \quad \cdots (4B)$$

ADDITION OF SHORT-PERIOD INCREASE TERM

$$PHX = \left( \frac{1}{N} \sum_{i=t-N-1}^{t-1} y_i \right) + A \left( \frac{1}{N} \sum_{i=t-N-1}^{t-1} \sigma_i \right) + B \quad \cdots (5A)$$

$$PLX = \left( \frac{1}{N} \sum_{i=t-N-1}^{t-1} y_i \right) - A \left( \frac{1}{N} \sum_{i=t-N-1}^{t-1} \sigma_i \right) - B \quad \cdots (5B)$$

FIG. 7

900
STORAGE MEDIUM
100
10
11
15
17
CPU
ROM
MANIPULATION PART
MEDIUM CONTROLLER
200
PARTICLE SENSOR
300
FFU
COMMUNICATION DEVICE
RAM
DISPLAY INTERFACE
STORAGE DEVICE
18
12
14
16
MONITOR
111

FIG. 8

200
PARTICLE SENSOR
200
PARTICLE SENSOR
200
PARTICLE SENSOR
100
101
DATA ACCUMULATION PART
102
STABILITY INDEX DERIVATION PART
103
UPPER-LIMIT PREDICTED VALUE CALCULATOR
106
UPPER-LIMIT PREDICTED VALUE CORRECTOR
105
DISPLAY CONTROLLER
104
INSTRUMENT CONTROLLER
111
MONITOR
300
FFU
300
FFU
300
FFU
300
FFU
300
FFU
300
FFU

*FIG. 9*

START
1
S10
CALCULATE MOVING AVERAGE (μ) (20 DATA POINTS)
S20
CALCULATE MOVING DEVIATION (δ) (20 DATA POINTS)
S30
CALCULATE UPPER-LIMIT PREDICTED VALUE
S40
UPPER-LIMIT PREDICTED VALUE > MEASURED VALUE?
NO
S50
CORRECT PREDICTED VALUE
YES
S60
UPPER-LIMIT PREDICTED VALUE IS GREATER THAN REFERENCE VALUE?
NO
YES
S100
INCREASE AIR VOLUME
1
S70
UPPER-LIMIT PREDICTED VALUE IS LESS THAN REFERENCE VALUE?
NO
YES
S80
DECREASE AIR VOLUME
S90
MAINTAIN AIR VOLUME LEVEL
1
1

FIG. 10

STATUS DATA
UPPER-LIMIT PREDICTED VALUE
MEASURED VALUE
CLOCK TIME

FIG. 11A
QUALITY INCREASES WITH DECREASING FOREIGN SUBSTANCE AMOUNT
SV
STABLE STATE
DISTURBANCE STATE CHANGES FROM MOMENT TO MOMENT
FIG. 11B
SV
UNSTABLE STATE
FIG. 11C
HOWEVER, BECAUSE OF EXCESSIVE QUALITY IN FIG. 11A, AIR VOLUME IS DECREASED TO PERMIT ENERGY SAVING CONTROL
SV
TV
OK
FIG. 11D
SV
TV
E E E E E E
NG
OUT OF MANAGEMENT CRITERION

FIG. 12A
STABLE STATE WITH SMALL DISTURBANCE
HL
MV
LL
FIG. 12B
UNSTABLE STATE WITH LARGE DISTURBANCE (LARGE VARIATION)
HL
MV
LL
DISTURBANCE STATE CHANGES FROM MOMENT TO MOMENT
FIG. 12C
OK
HL
MV
TV
LL
FIG. 12D
NG
HL
MV
TV
LL
E
E
E
E
E

*FIG. 13*

| FFU AIR VOLUME SETUP CONDITION | FFU AIR VOLUME |
|---|---|
| $\mu + 6\delta \leq$ REFERENCE VALUE | 1 |
| $\mu + 6\delta >$ REFERENCE VALUE | 2 |
| $\mu + 5\delta >$ REFERENCE VALUE | 3 |
| $\mu + 4\delta >$ REFERENCE VALUE | 4 |
| $\mu + 3\delta >$ REFERENCE VALUE | 5 |

*FIG. 14*

1) $\mu + 6\delta \leq$ REFERENCE VALUE (AIR VOLUME = 1)

REFERENCE VALUE
UPPER-LIMIT PREDICTED VALUE
μ+6σ
μ+5σ
μ+4σ
μ+3σ
AVERAGE : μ
MEASURED VALUE

# FIG. 15

2) $\mu + 6\delta$ > REFERENCE VALUE (AIR VOLUME = 2)

REFERENCE VALUE
UPPER-LIMIT PREDICTED VALUE
μ +6 σ
μ +5 σ
μ +4 σ
μ +3 σ
AVERAGE : μ
MEASURED VALUE

# FIG. 16

3) $\mu + 5\delta$ > REFERENCE VALUE (AIR VOLUME = 3)

REFERENCE VALUE
UPPER-LIMIT PREDICTED VALUE
μ +6 σ
μ +5 σ
μ +4 σ
μ +3 σ
AVERAGE : μ
MEASURED VALUE

## FIG. 17

4) $\mu + 4\delta$ > REFERENCE VALUE (AIR VOLUME = 4)

REFERENCE VALUE
UPPER-LIMIT PREDICTED VALUE
μ+6σ
μ+5σ
μ+4σ
μ+3σ
AVERAGE : μ
MEASURED VALUE

## FIG. 18

5) $\mu + 3\delta$ > REFERENCE VALUE (AIR VOLUME = 5)

REFERENCE VALUE
μ+6σ
UPPER-LIMIT PREDICTED VALUE
μ+5σ
μ+4σ
μ+3σ
AVERAGE : μ
MEASURED VALUE

FIG. 19
START
2
S10
CALCULATE MOVING AVERAGE (μ)
S20
CALCULATE MOVING DEVIATION (δ)
S31
CALCULATE PREDICTED VALUE (μ+3δ)
S32
CALCULATE PREDICTED VALUE IN EACH PROBABILITY(μ+4δ, μ+5δ, μ+6δ)
S33
EACH PREDICTED VALUE > MEASURED VALUE?
NO
YES
S34
INCREASE PREDICTED-VALUE MOVING DEVIATION FOR EXAMPLE, μ+3δ→μ+4δ
S61
μ+3δ > REFERENCE VALUE?
YES
NO
S62
FFU AIR VOLUME LEVEL 5
2
S63
μ+4δ > REFERENCE VALUE?
YES
NO
S64
FFU AIR VOLUME LEVEL 4
S65
μ+5δ > REFERENCE VALUE?
YES
NO
S66
FFU AIR VOLUME LEVEL 3
S67
μ+6δ > REFERENCE VALUE?
YES
NO
S68
FFU AIR VOLUME LEVEL 2
S69
FFU AIR VOLUME LEVEL 1
S71
Level(2)
S72
Level(1) < Level(2) ?
YES
NO
S73
LEVEL (2) (CONTROL)
2
S74
LEVEL (1) (CONTROL) FOR EXAMPLE, FOR 5 SECONDS
2

FIG. 20A
AIR VOLUME
LEVEL
5
0
300
310
320
330
340
350
360
370
380
390
CLOCK TIME
FIG. 20B
FOREIGN
SUBSTANCE
AMOUNT
100000
10000
1000
100
10
R
D1
D2
D3
D4
300
310
320
330
340
350
360
370
380
390
CLOCK TIME

FIG. 21

701
700
100
750
HEATER
CONTROLLER
MANIPULATOR
PC
400
REFLOW
FURNACE
702

FIG. 22
TEMPERATURE SENSOR
701
100
DATA ACCUMULATION PART
101
STABILITY INDEX DERIVATION PART
102
PREDICTED-VALUE CALCULATOR
103A
PREDICTED-VALUE CORRECTOR
106A
INSTRUMENT CONTROLLER
104
DISPLAY CONTROLLER
105
MANIPULATOR
750
MONITOR
111
HEATER
702
400
SIMULATOR
402
DATA ACQUISITION PART
401
DISPLAY PART
403

*FIG. 23*

400
410
411
415
417
CPU
ROM
MANIPULATION PART
MEDIUM CONTROLLER
COMMUNICATION DEVICE
RAM
DISPLAY PART
STORAGE DEVICE
418
412
414
416

*FIG. 24*

POST-CHANGE UPPER-LIMIT PREDICTED VALUE
INCREASE WIDTH
UPPER-LIMIT PREDICTED VALUE (μ + 3 δ)
EMERGENCY SENSING (2)
MEASURED VALUE
AVERAGE VALUE
LOWER-LIMIT PREDICTED VALUE (μ −3 σ)
MOVING AVERAGE : μ
MOVING DEVIATION : σ
POST-CHANGE LOWER-LIMIT PREDICTED VALUE
INCREASE WIDTH
EMERGENCY SENSING (1)

*FIG. 25*

DECREASE HEATER OUTPUT WHEN UPPER-LIMIT PREDICTED VALUE IS GREATER THAN THRESHOLD
POST-CHANGE UPPER-LIMIT PREDICTED VALUE
UPPER-LIMIT-SIDE THRESHOLD
UPPER-LIMIT PREDICTED VALUE (μ + 3 δ)
AVERAGE VALUE
MEASURED VALUE
LOWER-LIMIT PREDICTED VALUE (μ −3 σ)
MOVING AVERAGE: μ
MOVING DEVIATION: δ
POST-CHANGE LOWER-LIMIT PREDICTED VALUE
LOWER-LIMIT-SIDE THRESHOLD
INCREASE HEATER OUTPUT WHEN LOWER-LIMIT PREDICTED VALUE IS LESS THAN THRESHOLD

FIG. 26
START
CALCULATE MOVING AVERAGE (μ) (20 DATA POINTS)
SA10
CALCULATE MOVING DEVIATION (δ) (20 DATA POINTS)
SA20
CALCULATE UPPER-LIMIT PREDICTED VALUE
SA30
UPPER-LIMIT PREDICTED VALUE > MEASURED VALUE?
SA40
YES
NO
CORRECT PREDICTED VALUE
SA50
CALCULATE LOWER-LIMIT PREDICTED VALUE
SA51
LOWER-LIMIT PREDICTED VALUE < MEASURED VALUE?
SA52
YES
NO
CORRECT PREDICTED VALUE
SA53
UPPER-LIMIT PREDICTED VALUE > UPPER-LIMIT REFERENCE VALUE?
SA60
YES
NO
TURN OFF HEATER
SA100
LOWER-LIMIT PREDICTED VALUE < LOWER-LIMIT REFERENCE VALUE?
SA70
YES
NO
TURN ON HEATER
SA80
TURN OFF HEATER
SA90

*FIG. 27A*

Temperature (°C)
UPPER-LIMIT PREDICTION
LOWER-LIMIT PREDICTION
250
240
230
220
210
200
190
180
TEMPERATURE (°C)
1 8 15 22 29 36 43 50 57 64 71 78 85 92 99 106 113 120 127 134 141
TIME

*FIG. 27B*

HEATER OUTPUT
ON
OFF
HEATER OUTPUT
1 8 15 22 29 36 43 50 57 64 71 78 85 92 99 106 113 120 127 134 141
TIME

◆TEMPERATURE MANAGEMENT CRITERION
- UPPER-LIMIT TEMPERATURE: 230°C
- LOWER-LIMIT TEMPERATURE: 210°C

◆STABILITY INDEX
- UPPER-LIMIT PREDICTED VALUE: 6 δ
- LOWER-LIMIT PREDICTED VALUE: 3 δ

FIG. 28
Temperature (°C)
UPPER-LIMIT PREDICTION
LOWER-LIMIT PREDICTION
TEMPERATURE (°C)
270
260
250
240
230
220
210
200
190
180
0
20
40
60
80
100
120
140
TIME
MANAGEMENT CRITERION
MANAGEMENT CRITERION
◆TEMPERATURE MANAGEMENT CRITERION
-UPPER-LIMIT TEMPERATURE: 230°C
-LOWER-LIMIT TEMPERATURE: 210°C
◆STABILITY INDEX
-UPPER-LIMIT PREDICTED VALUE: 3 δ
-LOWER-LIMIT PREDICTED VALUE: 3 δ

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005249243 A
- JP 2002357346 A
- JP 2006029771 A
- JP 2011027408 A
- JP 2011069601 A